(19) Europäisches Patentamt
European Patent Office
Office européen des brevets

(11) EP 4 418 557 A1

(12) EUROPEAN PATENT APPLICATION

(43) Date of publication:
21.08.2024 Bulletin 2024/34

(21) Application number: 24152357.0

(22) Date of filing: 17.01.2024

(51) International Patent Classification (IPC):
H04B 7/08 (2006.01)   H04L 5/00 (2006.01)
H04W 72/23 (2023.01)   H04W 24/10 (2009.01)

(52) Cooperative Patent Classification (CPC):
H04B 7/08; H04L 5/003; H04W 72/23; H04W 24/10

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 17.02.2023 IN 202341010774

(71) Applicant: Nokia Technologies Oy
02610 Espoo (FI)

(72) Inventors:
• ROM, Christian
Aalborg (DK)

• CAUDURO DIAS DE PAIVA, Rafael
Aalborg (DK)
• DALSGAARD, Lars
Oulu (FI)
• BELLUR, Vinayak
Bangalore (IN)
• CAPORAL DEL BARRIO, Samantha
Aalborg (DK)

(74) Representative: Nokia EPO representatives
Nokia Technologies Oy
Karakaari 7
02610 Espoo (FI)

(54) **CORRECTED LINK EVALUATION SHARING FACTOR REPORTING**

(57) An approach is provided for corrected link evaluation sharing factor reporting in wireless communications. For a mobile entity perspective, the approach, for example, involves computing a corrected link evaluation sharing factor for a user equipment performing two simultaneous measurement procedures. For example, the corrected link evaluation sharing factor is applied to a first measurement procedure (e.g., L1 measurement) while the user equipment is performing a second measurement procedure (e.g., L3 measurement). The approach also involves transmitting the corrected link evaluation sharing factor to a network node. From a network entity perspective, the approach, for example, involves receiving a corrected link evaluation sharing factor from a user equipment performing two simultaneous measurement procedures. The approach also involves computing one or more updated Link Monitoring timers based, at least in part, on the corrected link evaluation sharing factor and transmitting the one or more updated Link Monitoring timers to the user equipment.

FIG. 7A

**Description**

FIELD OF DISCLOSURE

The following disclosure relates to enhancements for Radio Link Monitoring (RLM) and Beam Failure Detection (BFD) (i.e., Link Recovery) evaluation criteria in 5G New Radio Frequency 2 (NR FR2) and particularly focuses on user equipment (UEs)/devices which have multi-reception chains, and multi-panel reception capabilities.

BACKGROUND

In 5G NR, L1 and L3 measurements refer to two different levels of measurement that can be performed on the wireless network. L1 measurements refer to physical layer measurements, which are used to gather information about the radio environment, such as signal strength, interference, and channel quality. L1 measurements are done to monitor beam level measurements and are helpful for beam management and beam switching. L3 measurements are done to monitor neighbor cells and serving cell over a longer term for event-based measurement reporting. L3 measurements are filtered measurements which are reported via Measurement Reports, both at cell level and beam level.

L1 and L3 measurements play a critical role in the Link Recovery process in networks (e.g., 5G NR networks). In RRC Connected Mode, Link Recovery procedures enable the user equipment (UE) and base station (gNB) to maintain an acceptable radio link quality for communication. L1 and L3 measurements comprise key performance metrics such as signal strength, signal-to-noise ratio (SNR), and received signal quality, and enable real-time evaluation of the radio link quality. This information is used by the Link Recovery process to determine the cause of any issues and to trigger the appropriate recovery actions. For example, based on the L1 measurements, and thresholds for link quality evaluation, Radio Link Failure recovery procedures may be triggered for re-establishment of the radio link. Alternatively, based on L1 measurements, and thresholds for beam quality evaluation, Beam Failure Recovery procedures may be triggered for choosing the best beam for communication.

SUMMARY OF SOME EXEMPLARY EMBODIMENTS

Exemplary aspects and exemplary embodiments provided below may enable reduced link evaluation times, e.g., when performing link monitoring.

According to a first exemplary aspect, a first apparatus is disclosed comprising means for computing a corrected link evaluation sharing factor (also referred to herein as a dynamic correction sharing factor) for a user equipment that is capable of simultaneously receiving and processing downlink signals from different angles of arrival. For example, the dynamic correction sharing factor is applied to a first measurement procedure (e.g., a L1 measurement) while the user equipment is performing a second measurement procedure (e.g., a L3 measurement), for instance, to evaluate the radio link. The first apparatus also comprises means for transmitting the dynamic correction sharing factor to a network node (e.g., gNB). The first apparatus may for instance be or comprise a mobile entity (e.g., a mobile telecommunication device, a mobile phone, a user equipment, or a terminal device) and have multi-reception (M-Rx) capability (e.g., simultaneousReceptionDiffTypD-r16 or equivalent) in order to perform Radio Link Monitoring and Link Evaluation with a reduced evaluation time.

According to a second exemplary aspect, a second apparatus is disclosed comprising means for receiving a dynamic correction sharing factor from a user equipment. For example, the dynamic correction sharing factor is applied to determine one or more updated Link Monitoring timers. The second apparatus also comprises means for computing one or more updated Link Monitoring timers based, at least in part, on the dynamic correction sharing factor. The second apparatus further comprises means for transmitting the one or more Link Monitoring timers to the user equipment. The second apparatus may for instance be or comprise a network entity (e.g., a gNB or base station).

The means of the first and second apparatuses described herein can be implemented in hardware and/or software. They may comprise for instance at least one processor for executing processor instructions for performing the required functions, at least one memory storing the instructions, or both. Alternatively, they could comprise for instance circuitry that is designed or configured to implement the described functions, for instance implemented in a chipset or a chip, like an integrated circuit. In general, the means may comprise for instance one or more processing means or processors.

As used in this application, the term "circuitry" may refer to one or more or all of the following:

    (a) hardware-only circuit implementations (such as implementations in only analog and/or digital circuitry) and
    (b) combinations of hardware circuits and software, such as (as applicable):

        (i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

According to a third exemplary aspect, a first method (e.g., performed by a first apparatus as disclosed above) is disclosed, the method comprising computing a dynamic correction sharing factor for a user equipment that is capable of simultaneously receiving and processing downlink signals from different angles of arrival. For example, the dynamic correction sharing factor is applied to a first measurement procedure (e.g., a L1 measurement) while the user equipment is performing a second measurement procedure (e.g., a L3 measurement). The method also comprises transmitting the dynamic correction sharing factor to a network node (e.g., gNB). The first apparatus may for instance be or comprise a mobile entity (e.g., a mobile telecommunication device, a mobile phone, a user equipment, or a terminal device) and have multi-reception (M-Rx) capability (e.g., simultaneousReceptionDiffTypD-r16 or equivalent) in order to perform Radio Link Monitoring and Link Evaluation with a reduced evaluation time.

The first method may comprise the steps the first apparatus of the first exemplary aspect is configured to perform or for which the first apparatus has/comprises means for.

According to a fourth exemplary aspect, a second method (e.g., performed by the second apparatus as disclosed above) is disclosed, the method comprising receiving a dynamic correction sharing factor from a user equipment. For example, the dynamic correction sharing factor is applied to determine one or more updated Link Monitoring timers. The method also comprises computing the one or more updated Link Monitoring timers based, at least in part, on the dynamic correction sharing factor. The method further comprises transmitting the one or more Link Monitoring timers to the user equipment. The second apparatus also comprises means for computing one or more Link Monitoring timers based, at least in part, on the dynamic correction sharing factor. The second apparatus further comprises means for transmitting the Link Monitoring timers to the user equipment. The second apparatus may for instance be or comprise a network entity (e.g., a gNB or base station).

The second method may comprise the steps the second apparatus of the second exemplary aspect is configured to perform or for which the second apparatus has/comprises means for.

The method according to any aspect may for instance be performed and/or controlled by an apparatus, for instance a mobile entity or a network entity.

Alternatively, the method according to any aspect may be performed and/or controlled by more than one apparatus, for instance, a system comprising at least one mobile entity and at least one network entity.

According to a fifth exemplary aspect, a computer program is disclosed, the computer program when executed by a processor causing an apparatus to perform and/or control the actions and/or steps of the method according to at least one of the third and fourth exemplary aspect.

According to a sixth exemplary aspect, a system is disclosed, e.g., the system comprising at least one mobile entity and at least one network entity together performing the method according to at least one of the third and fourth exemplary aspects. For instance, a system comprising a first apparatus (e.g., mobile entity) comprising:

means for computing a dynamic correction sharing factor for a user equipment, e.g., the dynamic correction sharing factor is applied to a first measurement procedure (e.g., a L1 measurement) while the user equipment is performing a second measurement procedure (e.g., a L3 measurement); and
means for transmitting the dynamic correction sharing factor to a network node;

the system further comprising a second apparatus (e.g., network entity) comprising means for:

means for receiving a dynamic correction sharing factor from a user equipment, e.g., the dynamic correction sharing factor is applied to determine one or more updated Link Monitoring timers;
means for computing the one or more updated Link Monitoring timers based, at least in part, on the dynamic correction sharing factor; and

means for transmitting the one or more updated Link Monitoring timers to the user equipment.

The system may comprise, e.g., the apparatus (e.g., mobile entity and/or network entity) of any exemplary aspect as disclosed herewith.

According to a further exemplary aspect, an apparatus, e.g., a mobile and/or network entity, is disclosed, configured to perform and/or control or comprising respective means for performing and/or controlling the method according to any exemplary aspect. According to a further exemplary aspect, an apparatus, e.g., a mobile and/or network entity, is disclosed comprising at least one processor; and at least one memory storing instructions that, when executed by the at least one processor, cause the apparatus at least to perform the method according to any exemplary aspect.

According to a further exemplary aspect, a computer program product is disclosed, the computer program product when executed by a processor of an apparatus causing said apparatus to perform a method according to at least one of the third and fourth exemplary aspect.

According to a further exemplary aspect, a computer readable storage medium is disclosed, the computer readable storage medium comprising a computer program product or a computer program according to the fifth exemplary aspect.

Any disclosure herein relating to any exemplary aspect is to be understood to be equally disclosed with respect to any subject-matter according to the respective exemplary aspect, e.g., relating to an apparatus, a method, a computer program, and a computer-readable medium. Thus, for instance, the disclosure of a method step shall also be considered as a disclosure of means for performing and/or caused to perform the respective method step. Likewise, the disclosure of means for performing and/or causing to perform a method step shall also be considered as a disclosure of the method step itself. The same holds for any passage describing at least one processor; and at least one memory including instructions; the at least one memory and the instructions configured to, with the at least one processor, cause an apparatus at least to perform a step.

According to an exemplary embodiment of the first exemplary aspect, the first apparatus further comprises means for detecting that the user equipment is capable of performing an L1 measurement and an L3 measurement simultaneously. The computing of the dynamic correction sharing factor, the transmitting of the dynamic correction sharing factor, or a combination thereof is based on the detecting.

According to another exemplary embodiment of the first exemplary aspect, the dynamic correction sharing factor is computed based on one or more reference signal measurement window parameters (e.g., Synchronization Signal Block-based Radio Resource Management Measurement Timing Configuration parameters).

According to another exemplary embodiment of the first exemplary aspect, the first apparatus further comprises means for determining that an L1 reference signal is not received on a same antenna module as a neighbor cell L3 reference signal. The computing of the dynamic correction sharing factor, the transmitting of the dynamic correction sharing factor, or a combination thereof is based on the determining.

According to another exemplary embodiment of the first exemplary aspect, the first apparatus further comprises means for determining a factor based on a proportion of a plurality of Synchronization Signal Block-based Radio Resource Management Measurement Timing Configuration occasions that use one or more overlapping antenna modules. The computing of the dynamic correction sharing factor, the transmitting of the dynamic correction sharing factor, or a combination thereof is based on the determining.

According to another exemplary embodiment of the first exemplary aspect, the first apparatus further comprises means for determining that the user equipment has an antenna module that supports four-layer reception. The computing of the dynamic correction sharing factor, the transmitting of the dynamic correction sharing factor, or a combination thereof is based on the determining.

According to another exemplary embodiment of the first exemplary aspect, the first apparatus further comprises means for determining that an Angle of Arrival separation between an L1 signal from a serving cell and an L3 signal from a neighbor cell is above a threshold separation. The computing of the dynamic correction sharing factor, the transmitting of the dynamic correction sharing factor, or a combination thereof is based on the determining.

According to another exemplary embodiment of the first exemplary aspect, the first apparatus further comprises means for determining that an Angle of Arrival separation between an L1 signal from a serving cell and an L3 signal from a neighbor cell is below a threshold separation. The first apparatus further comprises means for determining that the L1 signal and the L3 signal are separable in a frequency domain or a code domain. The computing of the dynamic correction sharing factor, the transmitting of the dynamic correction sharing factor, or a combination thereof is based on the determining that the Angle of Arrival separation between the L1 signal and the L3 signal is below the threshold separation and the determining that the L1 signal and the L3 signal are separable.

According to another exemplary embodiment of the first exemplary aspect, the first apparatus further comprises means for receiving one or more updated one or more updated Link Monitoring timers from the network node in response to the transmitting of the dynamic correction sharing factor.

According to another exemplary embodiment of the first exemplary aspect, the first apparatus comprises means for receiving an indication from the network node that the dynamic correction sharing factor. The indication enables the transmitting of the dynamic correction sharing factor to the network node.

According to an exemplary embodiment of the second exemplary aspect, the second apparatus further comprises means for transmitting an indication to the user equipment that the user equipment is enable to transmit the dynamic correction sharing factor.

According to another exemplary embodiment of the second exemplary aspect, the indication is transmitted to the user equipment before the user equipment transmits the dynamic correction sharing factor.

It is to be understood that the presentation in this section is merely by way of examples and non-limiting.

Other features will become apparent from the following detailed description considered in conjunction with the accompanying drawings. It is to be understood, however, that the drawings are designed solely for purposes of illustration and not as a definition of the limits, for which reference should be made to the appended claims. It should be further understood that the drawings are not drawn to scale and that they are merely intended to conceptually illustrate the structures and procedures described herein.

BRIEF DESCRIPTION OF THE DRAWINGS

The example embodiments of the invention are illustrated by way of examples, and not by way of limitation, in the figures of the accompanying drawings:

FIG. 1 is a diagram of example cases of radio channels with different angle of arrivals, according to one exemplary embodiment;

FIG. 2 is a diagram of an example single polarization antenna four patch array (e.g., mmWave), according to one exemplary embodiment;

FIGs. 3A-3D are diagrams of different example downlink architecture representations, according to one exemplary embodiment;

FIG. 4 is a diagram of an example of no L1/L3 overlap, according to one exemplary embodiment;

FIG. 5 is a diagram of an example of L1/L3 overlap, according to one exemplary embodiment;

FIG. 6 is a diagram illustrating addition of a Pcorr-reporting parameter into UECapabilityInformation, according to one exemplary embodiment;

FIGs. 7A and 7B are a signaling diagram illustrating a process for dynamic correction sharing factor reporting, according to one exemplary embodiment;

FIG. 8 is diagram of different example cases for UE flow, according to one exemplary embodiment;

FIG. 9 is a flow diagram for dynamic correction sharing factor reporting at the UE, according to one exemplary embodiment;

FIGs. 10A and 10B are diagrams of example beam sweeping strategies, according to one exemplary embodiment;

FIGs. 11A-11C are diagrams showing example modifications to messaging protocols for dynamic correction sharing factor reporting, according to one exemplary embodiment;

FIG. 12 is a flowchart of a process for dynamic correction sharing factor reporting from a mobile entity perspective, according to one exemplary embodiment;

FIG. 13 is a flowchart of a process for dynamic correction sharing factor reporting from a network entity perspective, according to one exemplary embodiment;

FIG. 14 is a diagram of hardware that can be used to implement an exemplary embodiment; and

FIG. 15 is a diagram of a chip set that can be used to implement an exemplary embodiment.

DETAILED DESCRIPTION OF SOME EXEMPLARY EMBODIMENTS

The following description serves to deepen the understanding and shall be understood to complement and be read together with the description as provided in the above summary section of this specification. Some aspects may have a different terminology than, e.g., provided in the description above. The skilled person will nevertheless understand that those terms refer to the same subject-matter, e.g., by being more specific.

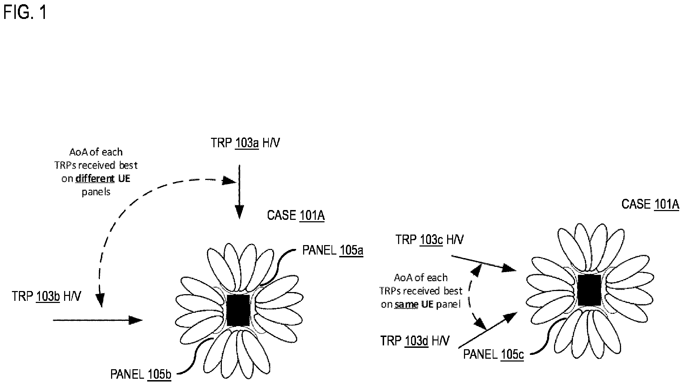

FIG. 1 is a diagram of example cases of radio channels with different angle of arrivals, according to one exemplary embodiment. 5G New Radio (NR) is the latest generation of cellular technology that promises to revolutionize the way that people connect and communicate. One of the key features of 5G NR is its ability to support extremely high data rates and low latency, making it ideal for a wide range of applications, including but not limited to virtual and augmented reality, autonomous vehicles, and the Internet of Things (IoT).

However, as with any wireless network, 5G NR is subject to various types of radio link failures, such as fading, interference, and congestion. To ensure that users are able to maintain a high-quality connection even in the face of these types of failures, 5G NR includes a feature known as "Link Recovery".

Link Recovery is a set of techniques and algorithms that are used to quickly detect and recover from radio link failures in a 5G NR network. The main goal of Link Recovery is to ensure that users are able to maintain a high-quality connection, even in the face of radio link failures, by quickly identifying and resolving the issue.

There are several key components to the Link Recovery process in 5G NR, including the detection of radio link failures, the selection of appropriate recovery actions, and the execution of the recovery actions. The specific Link Recovery techniques used in a 5G NR network will depend on various factors, including the type of radio link failure or beam link failure, the network configuration, and the type of user equipment (UE) being used.

As described above, radio link recovery procedures generally include Radio Link Monitoring (RLM) in combination with Beam Failure Detection (BFD). For example, RLM is responsible for continuously monitoring the quality of the wireless connection between the user equipment (UE) and the base station (gNB). The goal of RLM is to provide real-time information about the quality of the wireless connection, so that the network can quickly detect and resolve any issues that arise.

RLM works by monitoring various parameters related to the wireless connection, such as signal strength, signal-to-noise ratio (SNR), and received signal quality. This information is then used to calculate key performance metrics, such as link quality and link reliability, which are used to assess the quality of the connection.

If the RLM process detects that the quality of the wireless connection is degraded or has failed, it will trigger a Link Recovery process, which is responsible for resolving the issue. Link Recovery can involve a wide range of techniques and algorithms, such as adjusting the transmission parameters, switching to a different radio frequency, or establishing a new connection to a different base station.

Similarly, BFD helps to ensure that users are able to maintain a high-quality connection, even in the face of beam-specific failures, such as blocked or misaligned beams. BFD, for instance, is a process that continuously monitors the performance of the beams used for wireless communication between the user equipment (UE) and the base station (gNB). The goal of BFD is to quickly detect any issues with the beams, such as blockages or misalignments, and trigger a recovery process to resolve the issue.

When RLM is combined with BFD, it provides a comprehensive solution for monitoring the quality of the wireless connection and quickly resolving any issues that arise. RLM monitors the overall quality of the wireless connection, while BFD focuses specifically on the performance of the beams. Together, these two processes provide a robust and reliable solution for ensuring that users are able to maintain a high-quality connection, even in the face of beam-specific failures.

RLM and Beam Failure Detection (BFD) evaluation periods are affected significantly by the sharing factor P, defined in 3GPP TS 38.133 RLM and Link Recovery procedure minimum measurement requirements. For example, sharing factor is a parameter indicating the ratio between the RLM reference signal (RLM-RS) sample rate available for the RLM feature in question (e.g., BFD, Beam Failure Recovery (BFR), Candidate Beam Detection (CBD), etc.) and the sample rate of the total among to the RLM-RS samples transmitted to a given UE. In other words, the sharing factor represents the fraction of the total available resources that assigned to each UE. A higher sharing factor value indicates that a greater proportion of the resources are assigned to a particular UE, while a lower sharing factor value indicates that a smaller proportion of the resources are assigned to that UE. For example, the sharing factor can be used by the gNB to determine the allocation of resources such as time slots and frequency bands between the UEs in a given cell. In one embodiment, sharing factor P is defined to allow UEs time to measure related reference signals when these are shared with other measurements or overlapping with measurement gaps. Hence, this factor P is defined to resolve issues when measurement reference signals overlap with the configuration of Synchronization Signal Block-based (SSB-based) Radio Resource Management Measurement Timing Configuration (SMTC) occasions, measurement gaps. Consequently, the UE gets additional time for performing the relevant measurements when UE has to share the same reference signals (RS) for different purposes and allow UE enough time to meet the minimum UE requirements for evaluation of in-sync and out-of-sync criteria in discontinuous reception (DRX) and continuous reception (noDRX) modes and quality of link Qout_LR_x (where x can be Synchronization Signal Block (SSB) or Channel State Information Reference Signals (CSI-RS)).

For simplicity, the various exemplary embodiments described herein are discussed using numerical examples on the case where the configured RLM-RS and RLM-BFD resources are only SSBs. Similar conclusions can be also derived in the case where CSI-RS is used for RLM and/or link recovery or a mix of SSB and CSI-RS is used.

As an initial use case description, there are two different cases of radio channels with different angle of arrivals (AoA) between Transmission Configuration Indicator (TCI) states of each Transmission Reception Point (TRP) signal. The various exemplary embodiments described herein distinguish between the case where the UE receives best on two different panels (Case 101a) and the case where the UE receives best on a single panel (Case 101b), as shown in FIG. 1. More specifically, FIG. 1 illustrates two cases 101a and 101b of enhanced FR2 UEs with simultaneous downlink (DL) reception with two different quasi co-located QCL TypeD RSs on a single component carrier. Case 101a with each TCI of each TRP signal 103a and 103b received on different UE panels 105a and 105b respectively, and Case 101b with each TCI of each TRP signal 103c and 103d received by one UE panel 105c only.

In order to understand the background of the UE architectures considered in the various exemplary embodiments described herein, a discussion of some of the known RF front end architectures used for commercial Smartphones is provided. In addition, some assumptions and simplifications are also presented in order to focus on the key problem and assumptions at hand.

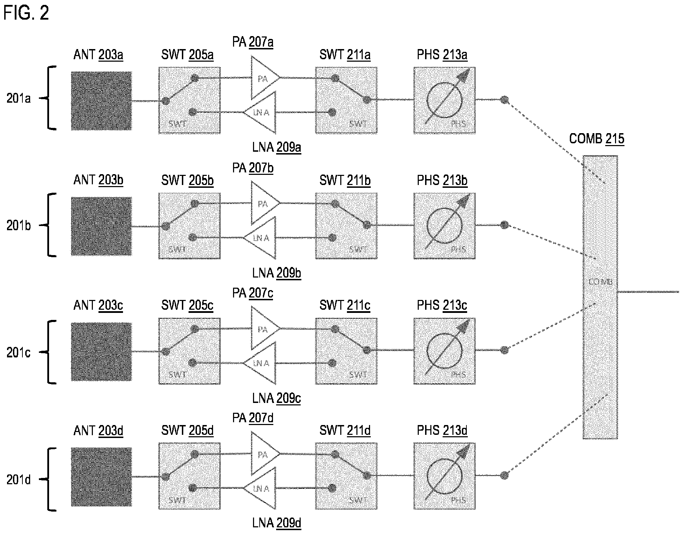

In a first step, FIG. 2 is a diagram representing an antenna (e.g., mmWave) array of four patches 201a-201d with a structure covering a single polarization, according to one exemplary embodiment. Each antenna element (ANTs 203a- 203b) is connected to a switch (SWTs 205a-205b) to handle the Time Division Duplexing (TDD) nature of the signal. In uplink (UL) the signal is amplified by a Power Amplifier (PAs 207a-207d). In downlink (DL) the signal is amplified by a Low Noise Amplifier (LNAs 209a- 209d), then followed by another switch (SWTs 211a-211d), a bi-directional phase shifter (PHSs 213a-213d) and finally a combiner (COMB 215).

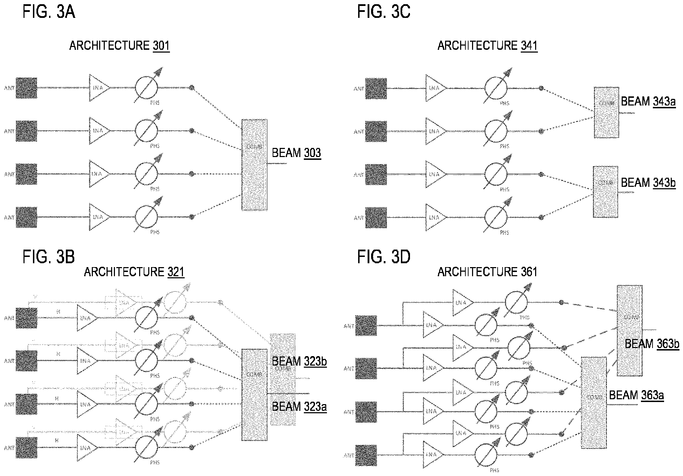

FIGs. 3A-3D are diagrams of different example downlink architecture representations, according to one exemplary embodiment. In one embodiment, in order to stick to standard objectives (e.g., rel-18 RAN4 objective) in DL Multiple Input Multiple Output (MIMO), FIGs. 3A-3D are illustrated to show only the DL part of the architecture and signal. Thus, four architectures 301, 321, 341, and 361 (e.g., comprising the elements illustrated in the example of FIG. 2 as indicated by element shape) are respectively depicted in FIGs. 3A-3D:

- Architecture 301 of FIG. 3A is a simplified DL single polarization four-patch combined steerable array. This array controls a single polarized beam 303.
- Architecture 321 of FIG. 3B is a simplified DL Dual polarized (H+V) four-patch combined steerable array. This architecture controls two beams 323a and 232b, one in each polarization, thus associated with 2 RX-chains.
- Architecture 341 of FIG. 3C (also called "split array") is a simplified DL single polarization 2x2 patch combined steerable dual array. This architecture controls 2 beams 343a and 343b in the same polarization, created each with 2 patches per beam 343a and 343b, thus associated with 2 RX-chains.
- Architecture 361 of FIG. 3D (also called "full HAD array") is a simplified DL single polarization four-patch combined steerable array. This architecture controls 2 beams 363a and 363b in the same polarization. The signal is split after each antenna feeding point in such a way that the two beams 363a and 363b exploit having maximum array gain (relying on four patches in a single polarization) while being steered independently. This architecture will enable from a single array of a panel to have 2 simultaneous beams 363a and 363b with independent steering directions and associated RX-chains.

Of these architectures only architecture 321 shows dual polarized connection, where Architectures 301, 341, and 361 all are single polarized versions. To understand the architectures 321, 341, and 361 in the context of 4-layer MIMO, it is easily seen that they would need a double implementation that taps onto the antenna elements in the opposite polarization in addition (e.g., architecture 341 and 361) or splits additionally (e.g., architecture 321), thereby bringing four combiners each carrying a MIMO layer.

In the context of describing the various exemplary embodiments discussed herein, it is assumed that a UE is using panels with one of the two below architecture types:

- "Legacy 2Rx panel" such as architecture 321 supporting a maximum of two layers per panel; and
- "New 4Rx panel" supporting two simultaneous dual polarized RX chains per panel such architecture 341 or architecture 361, allowing for four layers per panel (although one polarization is omitted in the figures to keep them from being overcomplex while capturing the concept).

According to 3GPP TS 38.133 8.1.2.2 (Signaling characteristics, RLM, requirements for SSB based radio link monitoring, minimum requirement): "UE shall be able to evaluate whether the downlink radio link quality on the configured RLM-RS resource estimated over the last $T_{Evaluate\_out\_SSB}$ [ms] period becomes worse than the threshold $Q_{Out\_SSB}$ within $T_{Evaluate\_out\_SSB}$ [ms] evaluation period. UE shall be able to evaluate whether the downlink radio link quality on the configured RLM-RS resource estimated over the last $T_{Evaluate\_in\_SSB}$ [ms] period becomes better than the threshold $Q_{In\_SSB}$ within $T_{Evaluate\_in\_SSB}$ [ms] evaluation period."

By way of example, evaluation periods for in-sync and out-of-sync conditions with SSB based L1 RLM-RS measurements are based on Table 1 and Table 2 [section 8.1.2 "8.1.2 Requirements for SSB based radio link monitoring", 8.5.2.2 of 3GPP TS 38.133]. As used herein L1 refers to the physical layer of the 5G NR protocol stack. For example, the physical layer of the 5G NR protocol stack is responsible for providing the basic transmission and reception of information over the air interface. It includes functions such as coding, modulation, error correction, and synchronization. The L1 layer also provides the necessary physical transmission channels, such as radio frequency (RF) channels, to support communication between the UE and the 5G NR network. Table 1 below provides examples of the evaluate period $T_{Evaluate\_out\_SSB}$ and $T_{Evaluate\_in\_SSB}$ for FR2 for RLM.

**Table 1**

| Configuration | $T_{Evaluate\_out\_SSB}$ (ms) | $T_{Evaluate\_in\_SSB}$ (ms) |
|---|---|---|
| no DRX | $Max(200, Ceil(10 * P * N) * T_{SSB})$ | $Max(100, Ceil(5 * P * N) * T_{SSB})$ |
| DRX cycle≤320ms | $Max(200, Ceil(15 * P * N) * Max(T_{DRX}, T_{SSB}))$ | $Max(100, Ceil(7.5 * P * N) * Max(T_{DRx}, T_{SSB}))$ |
| DRX cycle>320ms | $Ceil(10 * P * N) * T_{DRX}$ | $Ceil(5 * P * N) * T_{DRX}$ |
| NOTE: $T_{SSB}$ is the periodicity of the SSB configured for RLM. $T_{DRX}$ is the DRX cycle length. | | |

Table 2 below provides examples of the Evaluation period $TEvaluate\_BFD_{SSB}$ for FR2 for BFD.

**Table 2**

| Configuration | $T_{Evaluate\_BFD\_SSB}$ (ms) |
|---|---|
| no DRX | $Max(50, Ceil(5 ' P ' N) ' T_{SSB})$ |
| DRX cycle ≤ 320ms | $Max(50, Ceil(7.5 ' P ' N) ' Max(T_{DRX}, T_{SSB}))$ |
| DRX cycle > 320ms | $Ceil(5 ' P ' N) ' T_{DRX}$ |
| Note: $T_{SSB}$ is the periodicity of SSB in the set $\overline{q_0}$. $T_{DRX}$ is the DRX cycle length. | |

N is defined as a scaling factor related to beam sweeping at the UE and is fixed to 8 for FR2-1.

Depending on the overlap or coincidence of SSB RLM-RS with SMTC windows, and/or measurement gaps, the sharing factor P relaxes the UE requirements and will increase the evaluation periods of the in-sync and out-of-sync conditions. This delays the Radio Link Recovery or Link Recovery process.

In one embodiment, the P factor is calculated based on different conditions depending on relationship of RLM/BFD RS and SMTC periodicity, as well as measurement gaps configuration. Two main formulas are used for describing that calculation is as follows:

$$P = \frac{1}{1 - \dfrac{T_{SSB}}{T_{\text{SMTCperiod}}}}$$

where $\mathbf{T_{SSB}}$ is the SSB period and $\mathbf{T_{SMTCperiod}}$ is the SMTC window period.

In case the reference signals are overlapping with SMTC, or (if UE supports concurrent measurement gaps), the formula used is as follows:

$$P = \frac{1}{1 - \dfrac{T_{SSB}}{xRP} - \dfrac{T_{SSB}}{T_{\text{SMTCperiod}}}}$$

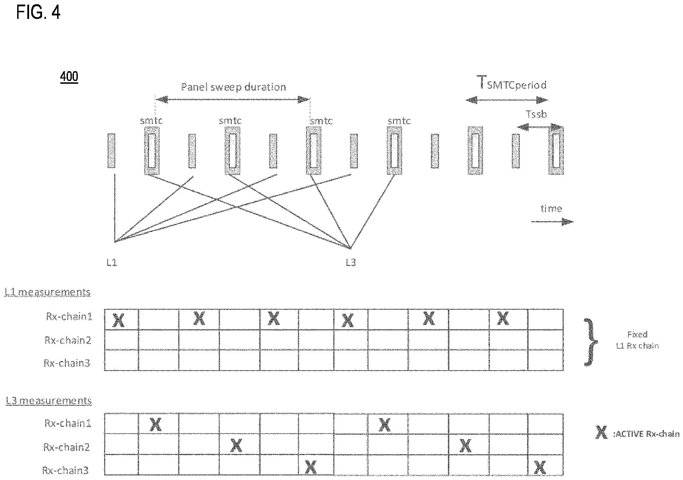

In case measurement gaps are overlapping with the related reference signals. The formulas reflect the cases with measurement occasions overlapping in time, as shown in FIG. 4, which illustrates a case of SMTC overlapping with reference signals used for RLM and/or BFD (link recovery). In this example, for every second SSB used for L1 measurements there is an SMTC overlap.

As illustrated in example 400 of FIG. 3, during SMTC windows the UE is not expected to update its L1 measurements and only update its L3 measurements in RAN4 requirements up to Rel 17. Therefore, the P factor is calculated considering that only the SSB occasions that do not overlap with SMTC occasions are available for L1 measurements. However, in Rel 18 RAN4, a key topic of discussion is the ability of a UE to measure L 1 and L3 simultaneously during SMTC windows thanks to the new multi-Rx architecture at the UE. In example 400, there are No L1/L3 overlap cases as shown in the illustration of Rx-chain activation distribution of 2Rx rel15 legacy FR2 MP-UE with emphasis on the distinction between L1 and L3 Rx-chain sampling/scanning. The example 400 is based on SSB period is 20ms and SMTC period is 40ms (provided by way illustration and not as limitations).

Some common numerical examples of the P factor calculation and associated L1 measurement periods are shown in Table 3. As shown in this table the P factor can be as high as 4 depending on the relation between measurement gap repetition period (MGRP), SSB, TSSB, SMTC, and TSMTC periodicity. As a result of those values the complete measurement duration and evaluation times for L1 procedures are all scaled by the P factor, thus up to 4 times longer than if P is 1 in this example.

**Table 3**

| TSSB | xRP | TSMTC | MGRP | P factor | L1 RSRP measurement period for link evaluation | |
|---|---|---|---|---|---|---|
| | | | | | No DRX | DRX=320 |
| 20 | 40 | 80 | 40 | 4 | 1920 ms | 30.72 s |
| 20 | 80 | 40 | 80 | 4 | 1920 ms | 30.72 s |

Additionally, the L1 RLM-RS measurement requirement in FR2-1 is factor 8 slower than in FR1 due to the N sweeping factor to address the continuous UE FR2 beam panel selection and UE FR2 beam refinement.

It can be noticed that this measurement time of L1 RSRP can take from roughly 2 seconds to 30 seconds if DRX is configured. Especially for FR2-1, that range of measurement time can limit the reliability of the measurements, since the UE might have moved during the measurement. Similar timers are used for radio link monitoring, radio link failure, which indicates that the UE would take several seconds to detect radio link failure.

In one exemplary embodiment, the adoption or use of simultaneous L1/L3 measurements for UEs supporting multi-Rx feature can result in the benefit of inclusion of simultaneous L1/L3 enhancements for faster measurements. By way of example, L3 refers to the third layer (e.g., network layer) of the protocol stack in a wireless communication system (e.g., 5GNR). The L3 layer is responsible for routing and forwarding data between the user equipment (UE) and other network elements. It provides the necessary network-level functions, such as addressing, routing, and network-level security, to support end-to-end communication between the UE and other network elements. The L3 layer also provides important functions, such as mobility management, to support seamless and efficient communication as the UE moves between different cells or network nodes. This is critical in 5G NR networks, where high mobility is a key requirement.

One technical challenge with the providing for simultaneous L1/L3 enhancements is that a simple UE capability would be too static to cover the typical UE scenarios. The UE implementation might be so that it may be capable of performing simultaneous L1 and L3 measurements depending on the spatial location of its active TCI states for which it must perform L1 measurements. Additionally, the UE might not be operating with multiple panels continuously. Therefore, a much more dynamic and fast signaling is needed versus a simple UE capability.

Since UE must support shorter Link monitoring evaluation to deal with intra-cell mobility conditions, it becomes important to optimize the overall L1 evaluation periods for RLM, BFD, and CBD.

Thus, one technical problem addressed by the various exemplary embodiments described herein is how to the intra-cell mobility and RLM and/or CBD, BFD timers for a FR2 UE in a fast and adaptive manner.

To address these technical challenges, the various exemplary embodiments described herein introduce a capability such that the UE reports to the network a corrected link evaluation sharing factor Pcorr to enhance the legacy static P L1/L3 sharing factor (or any other equivalent sharing factors), thereby exploiting next generation UEs with M-Rx capability (simultaneousReceptionDiffTypeD-r16) in order to reach optimum reduction of RLM-RS measurement timers. The corrected link evaluation sharing factor can also be referred to as a dynamic correction sharing factor that is dynamically computed at a UE that is capable of simultaneously receiving and processing downlink signals from different angles of arrival. In other words, the UE that computes a dynamic correction sharing factor is capable of simultaneously receiving and processing downlink signals from different spatial sources that have a clear separation of Angle of Arrival. The dynamic correction sharing factor, for instance, is applied to evaluate the radio link. The various exemplary embodiments described herein in introduce features such as the following:

- A new UE procedure to Let the UE detect if it can do two different measurement procedures (e.g., L1 and L3 measurements) simultaneously, then calculates a Pcorr metric (e.g., a dynamic correction sharing factor or synonymously corrected link evaluation sharing factor for different measurements procedures such as but not limited to L1/L3 measurements) - in other words, the dynamic correction sharing factor is applied to a first measurement procedure (e.g., L1 measurement) while the UE is performing a second measurement procedure (e.g., L3 measurement);

- A new UE capability (e.g., Pcorr-reporting) is proposed for UEs capable of simultaneousReceptionDiffTypeD-r16 (e.g., multi-Rx) that supports dynamic P factor correction to let the UE report the Pcorr dynamically; and
- A new UE reporting enabling the UE to report Pcorr to the network.

It is noted that although the various exemplary embodiments described herein may refer to L1 and L3 measurements, it is contemplated that the exemplary embodiments are also applicable to any two measurement procedures supported by the network.

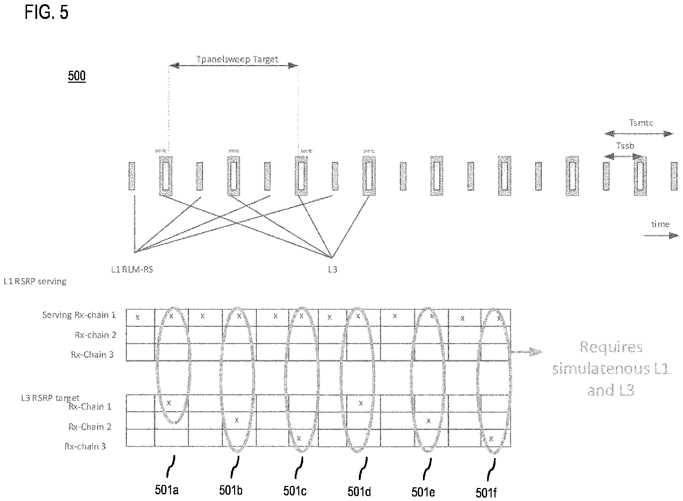

In example 400 of FIG. 4, no overlap of two or more measurement procedures (e.g., L1 and L3 is performed. In contrast, the various exemplary embodiments described herein focus on the case of overlapping of L1 and L3 measurement. As shown FIG. 5, example 500 illustrates UE panel utilization when overlapping L1/L3 measurements 501a-501f are allowed according to the various exemplary embodiments described herein.

In other words, with UEs having multi-Rx, multi-panel architectures, and supporting Independent Beam Management, the various exemplary embodiments describe herein make it possible to reduce the impact of sharing factor P during scenarios of RLM, BFD, and CBD resources (for L1 measurements) by allowing overlapping with measurement gap and/or SMTC occasions (for L3 measurements).

In one exemplary embodiment, when the neighbor cell (intra-frequency) L3 SSB-RS/CSI-RS based measurement can be measured using a different Rx beam (e.g., using different UE Rx chain) than the Rx Beam (with second Rx Chain) used for serving cell reception performing L1 measurements, then simultaneous L 1 and L3 measurements can be performed. Assuming the UE can perform simultaneous L1 and L3 measurement using these different Rx beams simultaneously, the sharing factor P can be further reduced beyond traditional specifications (e.g., current 3gpp specifications).

In summary, the various exemplary embodiments described herein enable the following features:

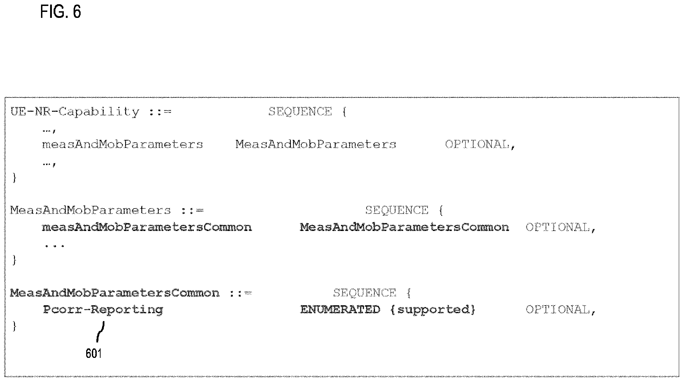

- **A new UE capability** (e.g., **Pcorr-reporting**) is provided for UEs capable of simultaneousReceptionDiffTypeD-r16 (e.g., multi-Rx) that supports dynamic P factor correction to enable the UE to report the Pcorr dynamically;
- **UECapabilityInformation** - Addition of a new parameter to signal UE capability for reporting corrected sharing factor as illustrated with the addition of Pcorr-reporting parameter 601 as shown in FIG. 6

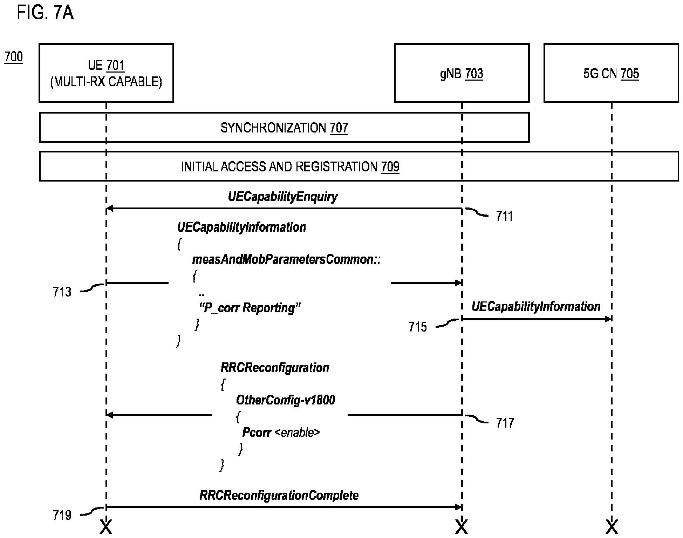

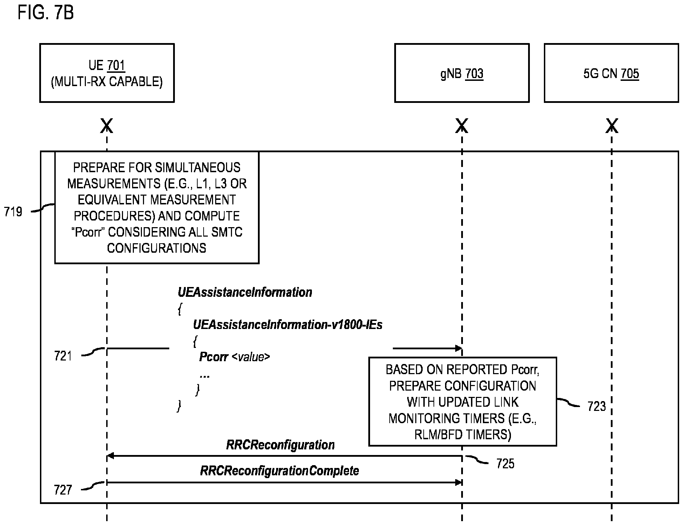

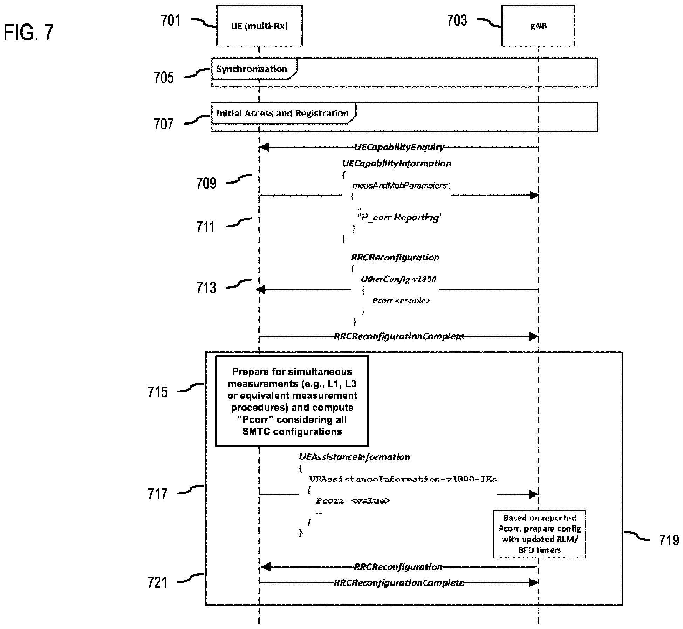

FIGs. 7A and 7B are a signaling diagram illustrating a process 700 for dynamic correction sharing factor reporting, according to one exemplary embodiment. The signaling diagram starts in FIG. 7A and continues to FIG. 7B. In the example of FIGs. 7A and 7B, a UE 701 capable of simultaneousReceptionDiffTypeD-r16 (e.g., a mobile entity), a gNB 703 capable of supporting PCorr reporting (e.g., a network entity or node), and 5G Core Network (CN) 705 are represented. More specifically, the process 700 provides a method and means for the UE 701 to indicate the dynamic correction sharing factor Pcorr to the gNB 703. In one exemplary embodiment, the process 700 is based on using UE assistance information (UAI) *UEAssistanceInformation.* For example, the *UEAssistance-Information* message is typically used for the indication of UE assistance information to the network. This message can be used in this scenario since it enables the UE 701 to provide information for the network (e.g., gNB 703) with good enough time granularity.

The process 700 includes the steps described below (note that although the process 700 is illustrated and described as a sequence of steps, it is contemplated that various embodiments of the process 700 may be performed in any order or combination and need not include all of the illustrated steps):

Steps 707-711 illustrates a procedure for the UE 701 to connect to the 5G CN 705 (e.g., via gNB 703) including: synchronization between the UE 701 and gNB 703 (step 707); initial access and registration between the UE 701, gNB 703, and 5G CN 705 (step 709); and exchanging a *UECapabilityEnquiry* message from the gNB 703 (step 711) and reply from the UE 701 (e.g., *UECapabilityInformation* message) (step 713).

More specifically, at step 713, support of new UE capabilities related to the Pcorr reporting feature is indicated by the UE 701 to the gNB 703 (e.g., as a parameter in the *UECapabilityInformation* message or equivalent). The gNB 703 then relays the reported *UECapabilityInformation* to the 5G CN 705 (step 715).

At step 717, an *RRCReconfiguration* message containing multi-Rx configuration is transmitted from the gNB 703 to the UE 701. In this step, the network (e.g., via gNB 703) includes information that is used by the UE 701 to know that the Pcorr indication is supported by the network. The UE 701 confirms to the gNB 103 that it has been configured to support the Pcorr indication (step 719). If this is not configured by the gNB 703, the UE 701 should not send UAI containing this information.

At step 719, the UE 701 prepares for simultaneous measurements using two different measurement procedures (e.g., L1 and L3 measurements or equivalent measurement procedures) by determining the Pcorr that it is currently capable of using. In one exemplary embodiment, the Pcorr factor calculation may be based on factors such as beam sweeping strategy, current active TCI states, and their respective angles of arrival indicating the spatial relationship of the L1 reference signals that are configured for L1 such as RSRP, RLM, BFD, CBD, and others (e.g., considering or otherwise based on SMTC configurations to prepare for simultaneous measurement procedures such as L1 and L3 measurements). If the calculated Pcorr factor is different than the current Pcorr factor configured at the UE 701, then proceed to step 721, otherwise wait and repeat step 719 to calculate a new Pcorr. The Pcorr, for instance, may be changed over time due to for example UE movement, where the angle of arrival of L1 reference signals is such that simultaneous measurement procedures (e.g., simultaneous L1 and L3 measurements) are not possible.

At step 721, the UE 701 sends an Uplink Dedicated Control Channel UL-DCCH message containing UEAssistanceInformation/MultiRxInfo/Pcorr. This step uses the calculation performed in the previous step 719. A UE 701 that is capable of providing an indication of P factor reduction in connected mode may initiate the procedure if it was configured to do so (see step 717), upon determination of a (single) corrected P factor (i.e., dynamic correction sharing factor) after considering the overlap of SSB-RS or CSI-RS configured for L1 measurements/procedures with all configured SMTC occasions for connected mode. In one exemplary embodiment, a UE 701 capable of doing simultaneous measurement procedures (e.g., simultaneous L1 and L3 measurements) in RRC_CONNECTED state shall initiate the procedure for providing an indication of this state by computation of a dynamic correction sharing factor P, upon being configured to do so, and upon change of its ability to do simultaneous L3 and L1 measurements for RLM and/or BFD RRC_CONNECTED state.

A step 723, the gNB 703 adapts its Link Monitoring timers (e.g., RLM/BFD/etc. timers) based on the new Pcorr value. After this step, the gNB 703 may reconfigure the UE 701 measurement parameters, such as T310, T311 or other L1/L3 measurement parameters through a *RRCReconfiguration* message (at step 725).

At step 727, the UE 701 reconfigures itself based on the new measurement parameters (e.g., updated Link Monitoring timers) received from the gNB 703 and acknowledges to the network via an *RRCReconfigurationComplete* message. The process 700 can then return to step 719.

In one exemplary embodiment, the value of Pcorr may be calculated using at least two options. In the first option (Option 1) the UE indicates the used P values as calculated in:

$$Pcorr_{option1} = \frac{1}{1 - \frac{T_{SSB}}{xRP} - \frac{T_{SSB}}{T_{eq}}}$$

where $_{eq}$ is the period of SMTC windows overlapping with RS used for L1 measurements. In this option the UE signals directly which value it will be applying.

In the second option (Option 2) the UE alternatively may report some correction factor which indicates how often L1 measurements cannot be performed during SMTC occasions. In this case the P formula would be modified as

$$Pcorr_{option2} = \frac{1}{1 - \frac{T_{SSB}}{xRP} - \frac{T_{SSB}}{kT_{SMTC}}}$$

and the UE can report *Pcorr_{option2}*, which is a computed correction of the sharing factor P mapped to an integer value.

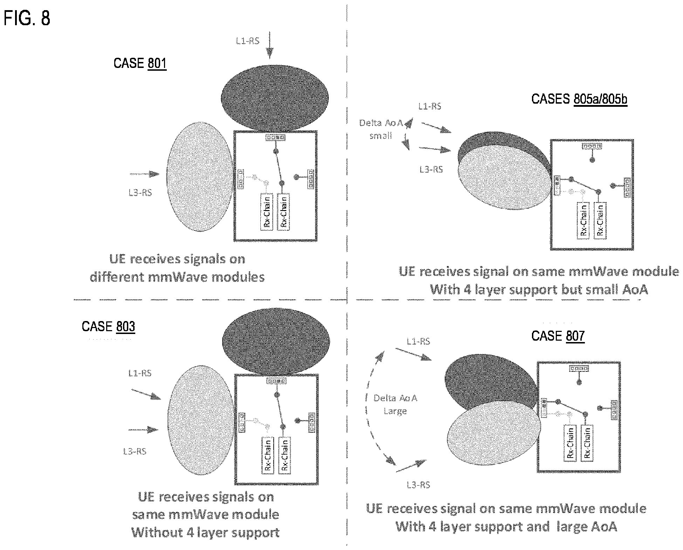

In the various exemplary embodiments described herein, a UE implementation method or means for determining a new UE reported parameter Pcorr to adjust the L3/L1 sharing factor is provided considering at least two types of multi-Rx architectures. As part of this, the SMTC occasions overlapping with L1 reference signals are evaluated considering the cases 801, 803, 805a/805b, AND 807 that are shown in FIG. 8, according to one exemplary embodiment. As shown, different cases used for the invention UE flow chart are presented:

- **In case 801,** the UE performs L1 and L3 measurements with a sufficiently large angle of separation, and therefore different UE panels are used for L1 and L3 measurements. In this case L1 and L3 measurements can be performed completely independently in a simultaneous manner.
- **In Case 803,** UE performs L1 and L3 measurements on the same mmWave module (e.g., antenna module) without 4 layer support (e.g., array architecture REF1 or REF2).
- **In Case 805a and 805b,** UE performs L1 and L3 measurements on the same mmWave module (e.g., antenna module) with 4 layer support (e.g. array architecture REF3 or REF2) but the AoA separation of the signals is small compared to the half power beamwidth of each beam.
- **In Case 807,** UE performs L1 and L3 measurements on the same mmWave module (e.g., antenna module) with 4 layer support and the AoA separation of the signals is large compared to the half power beamwidth of each beam.

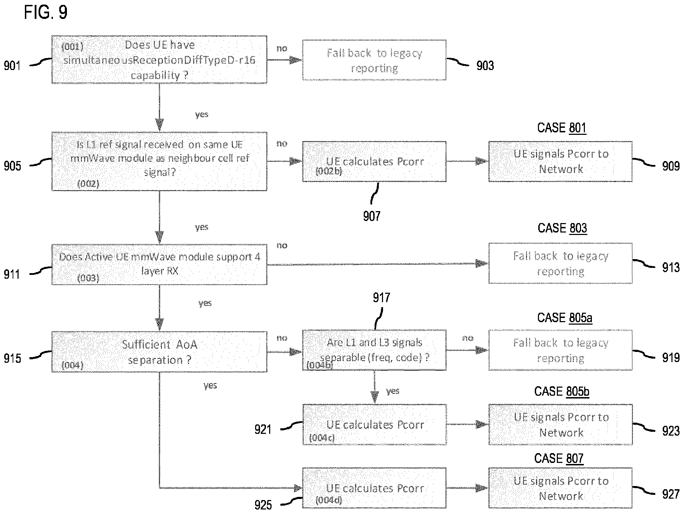

FIG. 9 is a flow diagram for dynamic correction sharing factor reporting at the UE, according to one exemplary embodiment. More specifically, the flow diagram of the implementation part at the UE of cases 801, 803, 805a, 805b, and 807 of FIG. 8 is depicted in FIG. 9. At step 901, the system (e.g., the UE alone or in combination with the network node - such as a gNB) determines "does UE support Multi-Rx capability: simultaneousReceptionDiffTypeD-r16?" If it is determined that the UE does not support multi-RX capability, then the system falls back to legacy reporting (step 903). If it is determined that the UE does support Multi-RX capability then the system proceeds to step 905.

At 905, the system determines "is L1 serving signal received on the same UE mmWave module (e.g., antenna module) as neighbor cell L3 reference signal?" If not, then the UE is capable of receiving simultaneously L1 and L3 reference signals and UE calculates the P correction factor Pcorr accordingly (step 907), which is then reported to network (909). This is represented by Case 801. If it is determined that the L1 serving signal is received on the same UE mmWave module (e.g., antenna module) as a neighbor cell L3 reference signal, the flow proceeds to step 911.

At step 911, the system determines "does the active UE mmWave module (e.g., antenna module) support 4 layers reception? If it is determined that the active antenna module does not support 4 layers reception, then legacy requirements and signaling applies (step 913). This is represented by case 803. If it is determined that the active antenna module does support 4 layers reception, then the flow proceeds to step 915.

At step 915, the system determines "is there sufficient Angle of Arrival (AoA) separation between the L1 signal from serving cell and L3 signal from neighbor cell?" If it is determined that the AoA separation between the L1 signal from the serving cell and the L3 signal from the neighbor cell is below a threshold separation (e.g., any specified threshold), the UE determines whether the L1 and L3 signals are separable (orthogonal) in a frequency or code domain (step 917). If it is determined that the L1 and L3 signal are not separable in the frequency of code domain, then legacy requirements and signaling applies (step 919). This is represented by case 805a.

Returning to step 915, if it is determined that the AoA separation between the L1 signal from the serving cell and the L3 signal from the neighbor cell is below a threshold separation, and L1 and L3 signals are separable (orthogonal) in frequency or code domain (step 917), then the UE is capable of receiving simultaneously L1 and L3 reference signals simultaneously and the UE calculates the P correction factor Pcorr accordingly (921), which is then reported to network (step 923). This is represented by case 805b.

Returning again to step 915, if it is determined that the AoA separation between the L1 signal from the serving cell and the L3 signal from the neighbor cell is above a threshold separation, then the UE can receive L1 and L3 reference signals simultaneously and the UE calculates the P correction factor Pcorr accordingly (step 925), which is then reported to network (step 927). This is represented by case 807.

Considering 3 out of the 5 cases (e.g., cases 801, 805b, and 807), the UE can calculate an updated P factor considering its architecture, and currently active TCI states. In the existing Radio Resource Management (RRM) requirements, the P factor formula is used to determine the amount of SMTC occasions that are available for L1 or L3 measurements. Therefore, the same logic can be applied for the multi-Rx case when enabling simultaneous L1 and L3 measurements. Considering that L1 could be performed simultaneously during some SMTC occasions, the formula provided further above can be updated as:

$$P = \frac{1}{1 - \dfrac{T_{SSB}}{xRP} - \dfrac{T_{SSB}}{T_{eq}}}$$

where $T_{eq}$ is the equivalent SMTC occasion, and where $T_{eq} = k \cdot T_{SMTC}$.

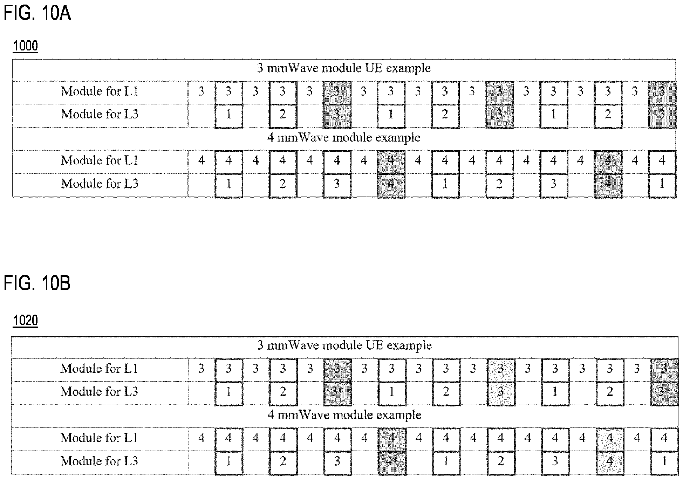

In one exemplary embodiment, if the UE only supports case 801, the factor is determined considering the proportion of SMTC occasions which use overlapping mmWave modules. FIGs. 10A and 10B are diagrams of example beam sweeping strategies for 3 and 4 mmWave modules, according to one exemplary embodiment. FIG. 10A illustrates an example 1000 of beam sweeping strategy per SSBurst and panel overlap for 3 and 4 panels (e.g., 3 and 4 mmWave modules) for a UE not supporting simultaneous L1 and L3 in the same panel (e.g., no UE module scanning assumed on L1). In example 1000 of FIG. 10A, the SMTC (with thicker borders) has twice the periodicity of the SSBurst used for L1. For the 3 mmWave module example, every third SMTC occasion has overlapping (indicated by darker shading fills at 3 = 3 SMTC occasion). Likewise, for the 4 mmWave module case, one every $k$ = 4 SMTC occasion uses the same panel for L1 and L3 measurements, and the equivalent SMTC occasion can be calculated with $k$ = 4.

When considering a UE that supports mmWave modules with 4Rx architecture (e.g., architectures 341 and 361), i.e., with the possibility of receiving L1 and L3 in the same module, a similar analysis can be done. Considering this scenario, the UE can determine considering only the SMTC occasions for which case 805a applies, i.e., small angle of arrival makes separation of L1 and L3 impossible without an additional element of orthogonalization (e.g., different frequency PRB utilization). In example 1020 of FIG., two examples are shown with 3 and 4 mmWave modules, where half of the SMTC occasions with L1 and L3 overlapping in the same module is considered. In the example with 3 mmWave modules, every 3rd SMTC window has overlapping L1 and L3, but only in the one where case 805a is considered and cannot be used for performing L1 measurements $k = 6$. Therefore, in this case the equivalent SMTC window can be extended considering $k = 6$. If the same approach is used for the 4 mmWave module case, ($k = 8$), the equivalent SMTC window can be extended considering $k = 8$.

An example of P calculation considering the $T_{eq}$ formula proposed in this invention is shown. From that analysis, it can be noticed that P can be reduced from 4 to close to 2 or 1.5 depending on the network configuration and UE architecture. The value of P is directly proportional to the total duration of measurements, which can be significantly reduced by taking advantage of the possibility to perform simultaneous L1 and L3 measurements. Table 4 below illustrates examples of sharing factor P calculation considering $T_{eq}$.

**Table 4**

| TSSB | xRP | TSMTC | MGRP | P (legacy) | Pcorr | | | |
| | | | | | k=3 | k=4 | k=6 | k=8 |
|---|---|---|---|---|---|---|---|---|
| 20 | 40 | 80 | 40 | 4 | 2.40 | 2.29 | 2.18 | 2.13 |
| 20 | 80 | 40 | 80 | 4 | 1.71 | 1.60 | 1.50 | 1.45 |

Table 5 below illustrates example calculations of saving in link evaluation time due to Pcorr considering $_{eq}$.

**Table 5**

| TSSB | xRP | TSMTC | MGRP | % Saving in link evaluation time due to Pcorr (invention) | | | |
| | | | | k=3 | k=4 | k=6 | k=8 |
|---|---|---|---|---|---|---|---|
| 20 | 40 | 80 | 40 | 40% | 42.75% | 45.5% | 46.75% |
| 20 | 80 | 40 | 80 | 57% | 60% | 62.5% | 63.75% |

The various exemplary embodiments described herein involve new signaling aspects which can be implemented as extensions to standard protocol messages (e.g., RAN2 and RAN4 specifications). in RAN4 specifications. For example, when considering RAN2 aspects, the specification can include support for the gNB to indicate for the UE that it may send indication of Pcorr, UE capabilities, and UE assistance information. The following protocol messages are affected:
This invention impacts the following protocol messages:

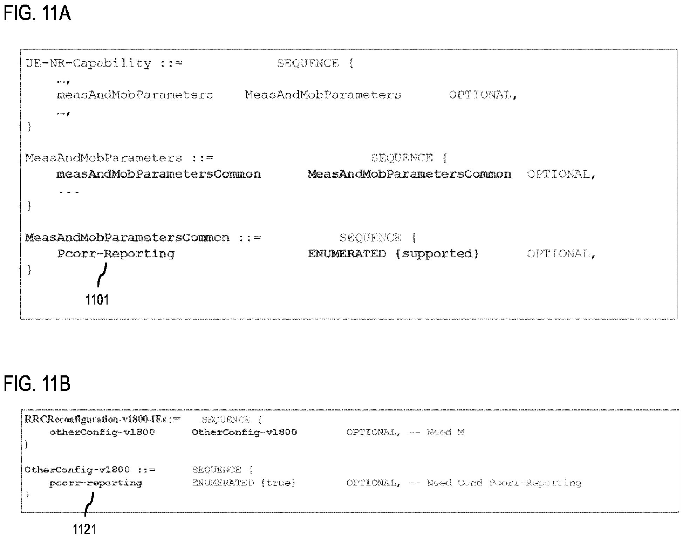

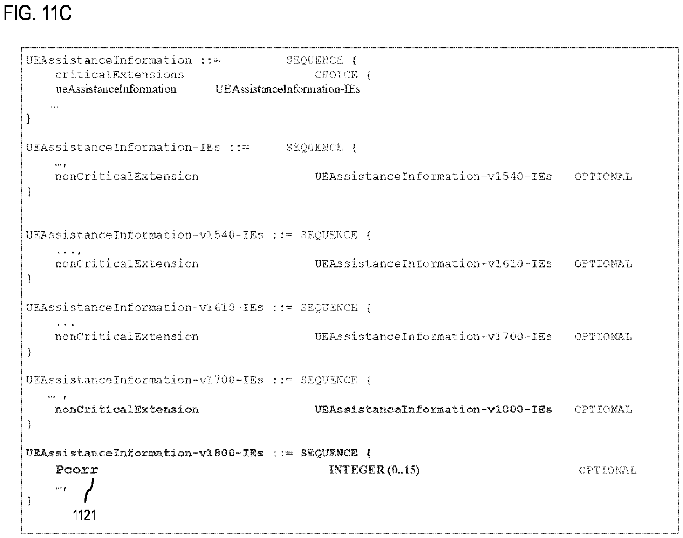

- **UECapabilityInformation** - As shown in FIG. 11A, addition of a new parameter 1101 to signal UE capability for reporting corrected sharing factor.
- **RRCReconfiguration** - As shown in FIG. 11B, addition of a new parameter 1121 to signal to UE to enable reporting of corrected sharing factor P.
- **UEAssistanceInformation** - As shown in FIG. 11C, addition of a new parameter 1141 to report corrected sharing factor P to the gNB.

Furthermore, the various exemplary embodiments described herein can also impact RAN4 specifications, where measurement times are to be calculated considering the updated values of Pcorr. According to 38.133, section 8.1.2, and 8.1.3, the sharing factor P is evaluated when an FR2 UE does not support concurrentMeasGap-r17 or when concurrent gaps are not configured. Then, when improvements in sharing factor P computation are enabled, the P value can be updated considering the Pcorr value. One example of how to consider that feature for RLM spec in section 8.1.2 of 38.133 is shown below with new text bolded in Table 6 below:

For FR2

- $P = \dfrac{1}{1-\frac{T_{SSB}}{T_{eq}}}$, when RLM-RS resource is not overlapped with GAP and the RLM-RS resource is partially overlapped with SMTC occasion ($T_{SSB} < T_{SMTCperiod}$), $T_{eq} = P_{corr} \cdot T_{SMTCperiod}$ **if the UE supports multi Rx P correction factor where $P_{corr}$ is the correction factor indicated by the UE through UAI message in MultiRxPcorr, otherwise $T_{eq} = T_{SMTCperiod}$.**

- P is $P_{sharing\ factor}$, when the RLM-RS resource is not overlapped with GAP and RLM-RS resource is fully overlapped with SMTC period ($T_{SSB} = T_{SMTCperiod}$).

- $P = \dfrac{1}{1-\frac{T_{SSB}}{xRP}-\frac{T_{SSB}}{T_{eq}}}$, when the RLM-RS resource is partially overlapped with GAP and the RLM-RS resource is partially overlapped with SMTC occasion ($T_{SSB} < T_{SMTCperiod}$) and SMTC occasion is not overlapped with [measurement gap] and

  - $T_{SMTCperiod} \neq xRP$ or

  - $T_{SMTCperiod} = xRP$ and $T_{SSB} < 0.5 * T_{SMTCperiod}$

- $P = \dfrac{P_{sharing\ factor}}{1-\frac{T_{SSB}}{xRP}}$, when the RLM-RS is partially overlapped with GAP and the RLM-RS is partially overlapped with SMTC occasion ($T_{SSB} < T_{SMTCperiod}$) and SMTC occasion is not overlapped with [measurement gap] and $T_{SMTCperiod} = xRP$ and $T_{SSB} = 0.5 \times T_{SMTCperiod}$

- $P = \dfrac{1}{1-\frac{T_{SSB}}{T_{eq}}}$, when the RLM-RS resource is partially overlapped with GAP and the RLM-RS resource is partially overlapped with SMTC occasion ($T_{SSB} < T_{SMTCperiod}$) and SMTC occasion is partially or fully overlapped with [measurement gap]

- $P = \dfrac{P_{sharing\ factor}}{1-\frac{T_{SSB}}{xGP}}$, when the RLM-RS resource is partially overlapped with GAP and the RLM-RS resource is fully overlapped with SMTC occasion ($T_{SSB} = T_{SMTCperiod}$) and SMTC occasion is partially overlapped with GAP ($T_{SMTCperiod} < xRP$)

**Table 6**

In comparison to the prior art, this invention has the following advantages:

- The corrected sharing factor P plays an important role in link evaluation time. For example, when Reference Signal resource (RLM-RSBFD-RS) occasions for link monitoring evaluation collides with configured SMTC occasion, corrected sharing factor P comes into play. With some SMTC occasions there could be complete overlap of the RLM-RS/BFD-RS, whereas with some other SMTC occasions there could be partial overlap.
- When the periodicity of SMTC is the lowest possible, and the Reference Signal resource occasions configured for purpose of link monitoring and evaluation are in complete overlap, then the various exemplary embodiments described herein can bring about a saving in link evaluation times. The following two Tables 7 (e.g., examples of sharing factor P calculation) and 8 (e.g., example saving in link evaluation time due to Pcorr) quantify example gains that are brought about by the corrected P sharing factor (Pcorr) computation. From the tables, up to 63% saving can be done in radio link quality evaluation times while using a corrected P sharing factor (Pcorr).

**Table 7**

| TSSB | xRP | TSMTC | MGRP | P (legacy) | Pcorr | | | |
|---|---|---|---|---|---|---|---|---|
| | | | | | k=3 | k=4 | k=6 | k=8 |
| 20 | 40 | 80 | 40 | 4 | 2.40 | 2.29 | 2.18 | 2.13 |
| 20 | 80 | 40 | 80 | 4 | 1.71 | 1.60 | 1.50 | 1.45 |

**Table 8**

| TSSB | xRP | TSMTC | MGRP | % Saving in link evaluation time due to Pcorr | | | |
|---|---|---|---|---|---|---|---|
| | | | | k=3 | k=4 | k=6 | k=8 |
| 20 | 40 | 80 | 40 | 40% | 42.75% | 45.5% | 46.75% |
| 20 | 80 | 40 | 80 | 57% | 60% | 62.5% | 63.75% |

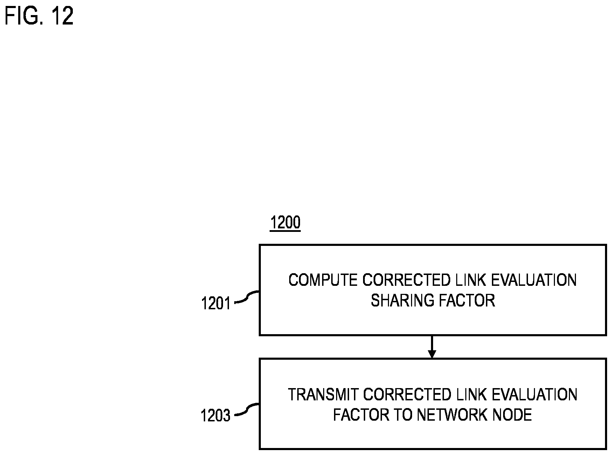

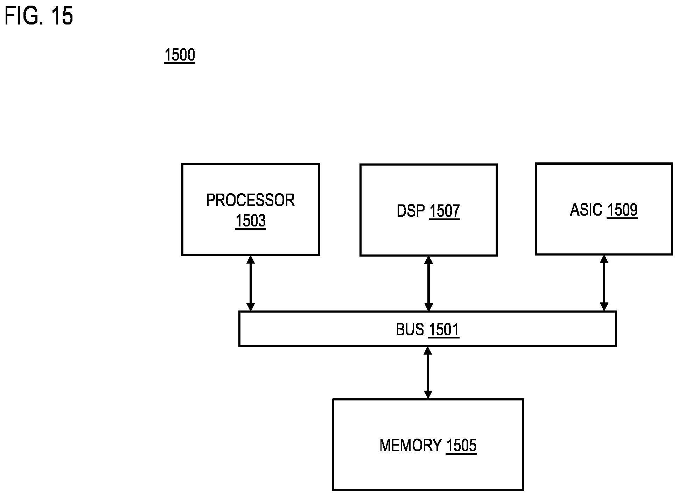

FIG. 12 is a flowchart of a process for dynamic correction sharing factor reporting from a mobile entity perspective, according to one exemplary embodiment. In various embodiments, the UE or equivalent mobile entity may perform one or more portions of the process 1200 and may be implemented in, for instance, a chip set including a processor and a memory as shown in FIG. 15. As such, the UE and/or equivalent mobile entity can provide means for accomplishing various parts of the process 1200, as well as means for accomplishing embodiments of other processes described herein in conjunction with other components of the various exemplary embodiment described herein. Although the process 1200 is illustrated and described as a sequence of steps, it is contemplated that various embodiments of the process 1200 may be performed in any order or combination and need not include all of the illustrated steps.

At step 1201, the UE computes a corrected link evaluation sharing factor (e.g., dynamic correction sharing factor) for a user equipment. The user equipment is capable of simultaneously receiving and processing downlink signals from different angles of arrival. For example, the corrected link evaluation sharing factor is applied to a first measurement procedure while the user equipment is performing a second measurement procedure. In one exemplary embodiment, the first measurement procedure is a L 1 measurement and the second measurement procedure is a L3 measurement.

In one exemplary embodiment, the corrected link evaluation sharing factor is computed based on one or more reference signal measurement window parameters. The one or more reference signal measurement window parameters include but are not limited an overlap of one or more Synchronization Signal Block-based Radio Link Monitoring reference signal occasions and of one or more Synchronization Signal Block-based reference signal measurement windows. As another example, the one or more reference signal measurement window parameters include but are not limited to a Synchronization Signal Block-based Radio Resource Management Measurement Timing Configuration.

At step 1203, the UE transmits the corrected link evaluation sharing factor to a network node. In one exemplary embodiment, the UE receiving an indication from the network node that the corrected link evaluation sharing factor can be reported. The indication enables the transmitting of the corrected link evaluation sharing factor to the network node.

In one exemplary embodiment, the UE can detect that the user equipment is capable of performing the first measurement procedure and the second measurement procedure simultaneously. The computing of the corrected link evaluation sharing factor, the transmitting of the corrected link evaluation sharing factor, or a combination thereof is then based on the detecting.

In another exemplary embodiment, the UE can determine that a reference signal used for performing the first measurement procedure is not received on a same antenna module as a reference signal used for performing the second measurement procedure. The computing of the corrected link evaluation sharing factor, the transmitting of the corrected link evaluation sharing factor, or a combination thereof is based on the determining.

In another exemplary embodiment, the UE can determine that the user equipment has an antenna module that supports four-layer reception. The computing of the corrected link evaluation sharing factor, the transmitting of the corrected link evaluation sharing factor, or a combination thereof is based on the determining.

In another exemplary embodiment, the UE can determine that an Angle of Arrival separation between an L1 signal from a serving cell and an L3 signal from a neighbor cell is above a threshold separation. The computing of the corrected link evaluation sharing factor, the transmitting of the corrected link evaluation sharing factor, or a combination thereof is based on the determining.

In another embodiment, the UE can determine that an Angle of Arrival separation between an L1 signal from a serving cell and an L3 signal from a neighbor cell is below a threshold separation, and that the L1 signal and the L3 signal are separable in a frequency domain or a code domain. The computing of the corrected link evaluation sharing factor, the transmitting of the corrected link evaluation sharing factor, or a combination thereof is based on the determining that the Angle of Arrival separation between the L1 signal and the L3 signal is below the threshold separation and the determining that the L1 signal and the L3 signal are separable.

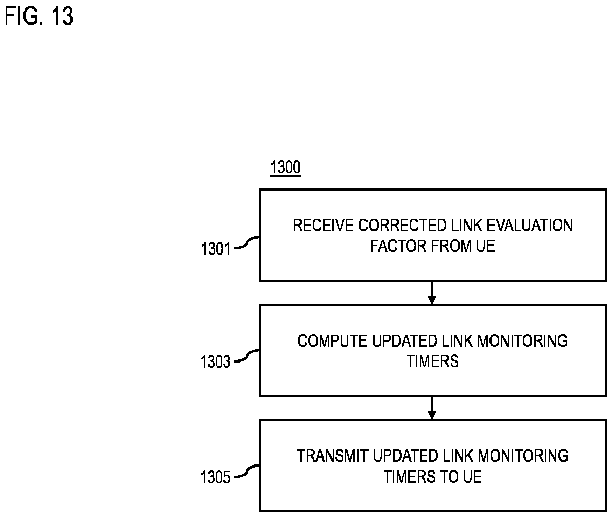

FIG. 13 is a flowchart of a process for corrected link evaluation sharing factor reporting from a network entity perspective, according to one exemplary embodiment. In various embodiments, the gNB or equivalent network entity may perform one or more portions of the process 1300 and may be implemented in, for instance, a chip set including a processor and a memory as shown in FIG. 15. As such, the gNB or equivalent network entity can provide means for accomplishing various parts of the process 1300, as well as means for accomplishing embodiments of other processes described herein in conjunction with other components of the various exemplary embodiment described herein. Although the process 1300 is illustrated and described as a sequence of steps, it is contemplated that various embodiments of the process 1300 may be performed in any order or combination and need not include all of the illustrated steps.

At step 1301, the gNB receives a corrected link evaluation sharing factor from a user equipment, wherein the corrected link evaluation sharing factor is applied to determine one or more updated Link Monitoring timers.

In one exemplary embodiment, the gNB transmits an indication to the user equipment that the user equipment is enabled to transmit the corrected link evaluation sharing factor. The indication, for instance, is transmitted to the user equipment before the user equipment transmits the corrected link evaluation sharing factor.

At step 1303, the gNB computes the one or more updated Link Monitoring timers based, at least in part, on the corrected link evaluation sharing factor.

At step 1305, the gNB updates the one or more updated Link Monitoring timers to the user equipment.

The processes described herein for providing corrected link evaluation sharing factor reporting may be advantageously implemented via software, hardware (e.g., general processor, Digital Signal Processing (DSP) chip, an Application Specific Integrated Circuit (ASIC), Field Programmable Gate Arrays (FPGAs), etc.), firmware or a combination thereof. Such exemplary hardware for performing the described functions is detailed below.

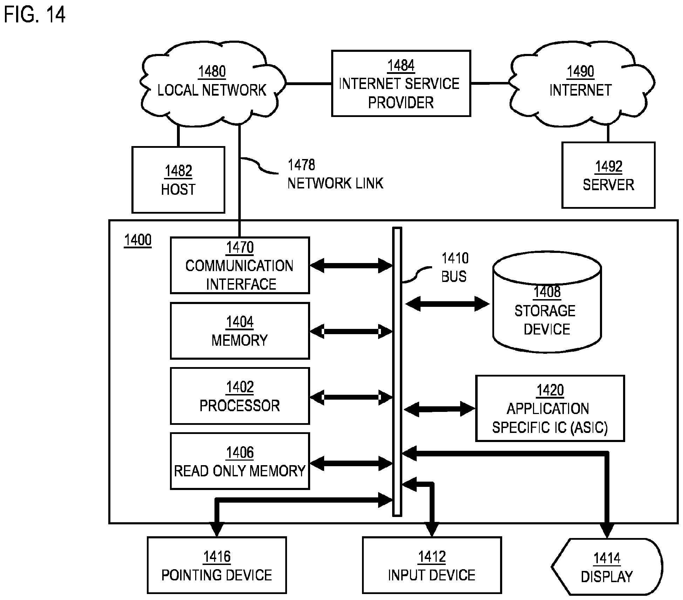

FIG. 14 illustrates a computer system 1400 upon which an embodiment of the invention may be implemented. Computer system 1400 is programmed (e.g., via computer program code or instructions) to provide corrected link evaluation sharing factor reporting as described herein and includes a communication mechanism such as a bus 1410 for passing information between other internal and external components of the computer system 1400. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 1410 includes one or more parallel conductors of information so that information is transferred quickly among devices coupled to the bus 1410. One or more processors 1402 for processing information are coupled with the bus 1410.

A processor 1402 performs a set of operations on information as specified by computer program code related to providing corrected link evaluation sharing factor reporting. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations includes bringing information in from the bus 1410 and placing information on the bus 1410. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 1402, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 1400 also includes a memory 1404 coupled to bus 1410. The memory 1404, such as a random access memory (RAM) or other dynamic storage device, stores information including processor instructions for providing corrected link evaluation sharing factor reporting. Dynamic memory allows information stored therein to be changed by the computer system 1400. RAM allows a unit of information stored at a location called a memory address to be stored and retrieved independently of information at neighboring addresses. The memory 1404 is also used by the processor 1402 to store temporary values during execution of processor instructions. The computer system 1400 also includes a read only memory (ROM) 1406 or other static storage device coupled to the bus 1410 for storing static information, including instructions, that is not changed by the computer system 1400. Some memory is composed of volatile storage that loses the information stored thereon when power is lost. Also coupled to bus 1410 is a non-volatile (persistent) storage device 1408, such as a magnetic disk, optical disk or flash card, for storing information, including instructions, that persists even when the computer system 1400 is turned off or otherwise loses power.

Information, including instructions for providing corrected link evaluation sharing factor reporting, is provided to the bus 1410 for use by the processor from an external input device 1412, such as a keyboard containing alphanumeric keys operated by a human user, or a sensor. A sensor detects conditions in its vicinity and transforms those detections into physical expression compatible with the measurable phenomenon used to represent information in computer system 1400. Other external devices coupled to bus 1410, used primarily for interacting with humans, include a display device 1414, such as a cathode ray tube (CRT) or a liquid crystal display (LCD), or plasma screen or printer for presenting text or images, and a pointing device 1416, such as a mouse or a trackball or cursor direction keys, or motion sensor, for controlling a position of a small cursor image presented on the display 1414 and issuing commands associated with graphical elements presented on the display 1414. In some embodiments, for example, in embodiments in which the computer system 1400 performs all functions automatically without human input, one or more of external input device 1412, display device 1414 and pointing device 1416 is omitted.

In the illustrated embodiment, special purpose hardware, such as an application specific integrated circuit (ASIC) 1420, is coupled to bus 1410. The special purpose hardware is configured to perform operations not performed by processor 1402 quickly enough for special purposes. Examples of application specific ICs include graphics accelerator cards for generating images for display 1414, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 1400 also includes one or more instances of a communications interface 1470 coupled to bus 1410. Communication interface 1470 provides a one-way or two-way communication coupling to a variety of external devices that operate with their own processors, such as printers, scanners and external disks. In general the coupling is with a network link 1478 that is connected to a local network 1480 to which a variety of external devices with their own processors are connected. For example, communication interface 1470 may be a parallel port or a serial port or a universal serial bus (USB) port on a personal computer. In some embodiments, communications interface 1470 is an integrated services digital network (ISDN) card or a digital subscriber line (DSL) card or a telephone modem that provides an information communication connection to a corresponding type of telephone line.

In some embodiments, a communication interface 1470 is a cable modem that converts signals on bus 1410 into signals for a communication connection over a coaxial cable or into optical signals for a communication connection over a fiber optic cable. As another example, communications interface 1470 may be a local area network (LAN) card to provide a data communication connection to a compatible LAN, such as Ethernet. Wireless links may also be implemented. For wireless links, the communications interface 1470 sends or receives or both sends and receives electrical, acoustic or electromagnetic signals, including infrared and optical signals, that carry information streams, such as digital data. For example, in wireless handheld devices, such as mobile telephones like cell phones, the communications interface 1470 includes a radio band electromagnetic transmitter and receiver called a radio transceiver. In certain embodiments, the communications interface 1470 enables connection to a communication network for providing corrected link evaluation sharing factor reporting.

The term computer-readable medium is used herein to refer to any medium that participates in providing information to processor 1402, including instructions for execution. Such a medium may take many forms, including, but not limited to, non-volatile media, volatile media and transmission media. Non-volatile media include, for example, optical or magnetic disks, such as storage device 1408. Volatile media include, for example, dynamic memory 1404. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

Network link 1478 typically provides information communication using transmission media through one or more networks to other devices that use or process the information. For example, network link 1478 may provide a connection through local network 1480 to a host computer 1482 or to equipment 1484 operated by an Internet Service Provider (ISP). ISP equipment 1484 in turn provides data communication services through the public, world-wide packet-switching communication network of networks now commonly referred to as the Internet 1490.

A computer called a server host 1492 connected to the Internet hosts a process that provides a service in response to information received over the Internet. For example, server host 1492 hosts a process that provides information representing video data for presentation at display 1414. It is contemplated that the components of system can be deployed in various configurations within other computer systems, e.g., host 1482 and server 1492.

FIG. 15 illustrates a chip set 1500 upon which an embodiment of the invention may be implemented. Chip set 1500 is programmed to provide corrected link evaluation sharing factor reporting as described herein and includes, for instance, the processor and memory components described with respect to FIG. 14 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 1500 includes a communication mechanism such as a bus 1501 for passing information among the components of the chip set 1500. A processor 1503 has connectivity to the bus 1501 to execute instructions and process information stored in, for example, a memory 1505. The processor 1503 may include one or more processing cores with each core configured to perform independently. A multi-core processor enables multiprocessing within a single physical package. Examples of a multi-core processor include two, four, eight, or greater numbers of processing cores. Alternatively or in addition, the processor 1503 may include one or more microprocessors configured in tandem via the bus 1501 to enable independent execution of instructions, pipelining, and multithreading. The processor 1503 may also be accompanied with one or more specialized components to perform certain processing functions and tasks such as one or more digital signal processors (DSP) 1507, or one or more application-specific integrated circuits (ASIC) 1509. A DSP 1507 typically is configured to process real-world signals (e.g., sound) in real time independently of the processor 1503. Similarly, an ASIC 1509 can be configured to perform specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 1503 and accompanying components have connectivity to the memory 1505 via the bus 1501. The memory 1505 includes both dynamic memory (e.g., RAM, magnetic disk, writable optical disk, etc.) and static memory (e.g., ROM, CD-ROM, etc.) for storing executable instructions that when executed perform the inventive steps described herein to provide corrected link evaluation sharing factor reporting. The memory 1505 also stores the data associated with or generated by the execution of the inventive steps.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. This expression "A and/or B" is considered to have the same meaning as "at least one of A or B", and "at least one of A and B". Furthermore, the article "a" is not to be understood as "one", i.e., use of the expression "an element" does not preclude that also further elements are present. The term "comprising" is to be understood in an open sense, i.e., in a way that an object that "comprises an element A" may also comprise further elements in addition to element A. Further, the term "comprising" may be limited to "consisting of', i.e., consisting of only the specified elements.

The expression "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

It will be understood that all presented embodiments are only exemplary, and that any feature presented for a particular example embodiment may be used with any aspect on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of only one of the enumerated features is possible. The specific combination of all subsequently enumerated features may as well be considered. Also, a plurality of only one of the enumerated features may be possible.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

The subject-matter has been described above by means of example embodiments. It should be noted that there are alternative ways and variations which are obvious to a skilled person in the art and can be implemented without deviating from the scope of the appended claims.

List of abbreviations:

> **AoA: Angle of Arrival**
> **BFD: Beam Failure Detection**
> **BFR: Beam Failure Recovery**
> **CBD: Candidate Beam Detection**
> **CN: Core Network**
> **CSI-RS: Channel State Information Reference Signal**
> **DRX: Discontinuous Reception**
> **MIMO: Multiple Input Multiple Output**
> **M-TRP: Multiple Transmit and Receive Point**
> **PRB: Physical Resource Block**
> **QCL: Quasi Co-located**
> **RLM: Radio Link Monitoring**
> **RLM-RS: Radio Link Monitoring Reference Signal**
> **RRM: Radio Resource Management**
> **RS: Reference Signal**
> **RSRP: Reference Signal Received Power**
> **Rx: Receiver/Receive/Reception**
> **SMTC: SSB-based RRM Measurement Timing Configuration**
> **SNR: Signal-to-Noise Ratio**
> **SSB: Synchronization Signal reference signal**
> **TRP: Transmit Reception Point**
> **Tx: Transmitter/Transmit/Transmission**
> **UE: User equipment**

**Claims**

1. An apparatus comprising:

> means for computing a corrected link evaluation sharing factor for a user equipment, wherein the corrected link evaluation sharing factor is applied to a first measurement procedure while the user equipment is performing a second measurement procedure; and
> means for transmitting the corrected link evaluation sharing factor to a network node.

2. The apparatus of claim 1, wherein the first measurement procedure is a L1 measurement and the second measurement procedure is a L3 measurement.

3. The apparatus of any of claims 1-2, wherein the user equipment is capable of simultaneously receiving and processing downlink signals from different angles of arrival.

4. The apparatus of any of claims 1-2, further comprising:

means for detecting that the user equipment is capable of performing the first measurement procedure and the second measurement procedure simultaneously,

wherein the computing of the corrected link evaluation sharing factor, the transmitting of the corrected link evaluation sharing factor, or a combination thereof is based on the detecting.

5. The apparatus of any of claims 1-2, wherein the corrected link evaluation sharing factor is computed based on one or more reference signal measurement window parameters.

6. The apparatus of claim 5, wherein the one or more reference signal measurement window parameters include an overlap of one or more Synchronization Signal Block-based Radio Link Monitoring reference signal occasions and of one or more Synchronization Signal Block-based reference signal measurement windows.

7. The apparatus of claim 5, wherein the one or more reference signal measurement window parameters include a Synchronization Signal Block-based Radio Resource Management Measurement Timing Configuration.

8. The apparatus of any of claims 1-2, further comprising:

means for determining that a reference signal used for performing the first measurement procedure is not received on a same antenna module as a reference signal used for performing the second measurement procedure,

wherein the computing of the corrected link evaluation sharing factor, the transmitting of the corrected link evaluation sharing factor, or a combination thereof is based on the determining.

9. The apparatus of any of claims 1-2, further comprising:

means for determining that the user equipment has an antenna module that supports four-layer reception,

wherein the computing of the corrected link evaluation sharing factor, the transmitting of the corrected link evaluation sharing factor, or a combination thereof is based on the determining.

10. The apparatus of any of claims 1-2, further comprising:

means for determining that an Angle of Arrival separation between an L 1 signal from a serving cell and an L3 signal from a neighbor cell is above a threshold separation,

wherein the computing of the corrected link evaluation sharing factor, the transmitting of the corrected link evaluation sharing factor, or a combination thereof is based on the determining.

11. The apparatus of any of claims 1-2, further comprising:

means for determining that an Angle of Arrival separation between an L 1 signal from a serving cell and an L3 signal from a neighbor cell is below a threshold separation; and

means for determining that the L1 signal and the L3 signal are separable in a frequency domain or a code domain, wherein the computing of the corrected link evaluation sharing factor, the transmitting of the corrected link evaluation sharing factor, or a combination thereof is based on the determining that the Angle of Arrival separation between the L1 signal and the L3 signal is below the threshold separation and the determining that the L1 signal and the L3 signal are separable.

12. The apparatus of any of claims 1-2, further comprising:
means for receiving one or more updated Link Monitoring timers from the network node in response to the transmitting of the corrected link evaluation sharing factor.

13. The apparatus of any of claims 1-2, further comprising:

means for receiving an indication from the network node that the corrected link evaluation sharing factor can be reported,

wherein the indication enables the transmitting of the corrected link evaluation sharing factor to the network node.

14. An apparatus comprising:

means for receiving a corrected link evaluation sharing factor from a user equipment, wherein the corrected link evaluation sharing factor is applied to determine one or more updated Link Monitoring timers; and
means for computing the one or more updated Link Monitoring timers based, at least in part, on the corrected link evaluation sharing factor; and
means for updating the one or more updated Link Monitoring timers to the user equipment.

15. A method comprising:

computing a corrected link evaluation sharing factor for a user equipment, wherein the corrected link evaluation sharing factor is applied to a first measurement procedure while the user equipment is performing a second measurement procedure; and
transmitting the corrected link evaluation sharing factor to a network node.

FIG. 1

TRP <u>103a</u> H/V

AoA of each
TRPs received best
on **different** UE
panels

CASE <u>101A</u>

PANEL <u>105a</u>

TRP <u>103b</u> H/V

PANEL <u>105b</u>

CASE <u>101A</u>

TRP <u>103c</u> H/V

AoA of each
TRPs received best
on **same** UE panel

TRP <u>103d</u> H/V

PANEL <u>105c</u>

FIG. 2

FIG. 3A

ARCHITECTURE 301

BEAM 303

FIG. 3C

ARCHITECTURE 341

BEAM 343a

BEAM 343b

FIG. 3B

ARCHITECTURE 321

BEAM 323b

BEAM 323a

FIG. 3D

ARCHITECTURE 361

BEAM 363b

BEAM 363a

FIG. 4

FIG. 5

FIG. 6

```
UE-NR-Capability ::=              SEQUENCE {
    ...,
    measAndMobParameters    MeasAndMobParameters      OPTIONAL,
    ...,
}

MeasAndMobParameters ::=                      SEQUENCE {
    measAndMobParametersCommon    MeasAndMobParametersCommon  OPTIONAL,
    ...
}

MeasAndMobParametersCommon ::=          SEQUENCE {
    Pcorr-Reporting              ENUMERATED {supported}      OPTIONAL,
}
             601
```

FIG. 7A

700

| UE 701 (MULTI-RX CAPABLE) | | gNB 703 | 5G CN 705 |

SYNCHRONIZATION 707

INITIAL ACCESS AND REGISTRATION 709

*UECapabilityEnquiry*

711

*UECapabilityInformation*
*{*
  *measAndMobParametersCommon::*
  *{*
   *..*
   *"P_corr Reporting"*
  *}*
*}*

713

*UECapabilityInformation*

715

*RRCReconfiguration*
*{*
  *OtherConfig-v1800*
  *{*
   *Pcorr <enable>*
  *}*
*}*

717

*RRCReconfigurationComplete*

719

X       X       X

FIG. 7B

```
┌──────────────────────┐          ┌──────────────┐   ┌──────────────┐
│       UE 701         │          │   gNB 703    │   │  5G CN 705   │
│  (MULTI-RX CAPABLE)  │          │              │   │              │
└──────────────────────┘          └──────────────┘   └──────────────┘
```

719

PREPARE FOR SIMULTANEOUS
MEASUREMENTS (E.G., L1, L3 OR
EQUIVALENT MEASUREMENT
PROCEDURES) AND COMPUTE
"Pcorr" CONSIDERING ALL SMTC
CONFIGURATIONS

*UEAssistanceInformation*
*{*
 *UEAssistanceInformation-v1800-IEs*
 *{*
721   *Pcorr <value>*
      *...*
 *}*
*}*

723

BASED ON REPORTED Pcorr,
PREPARE CONFIGURATION
WITH UPDATED LINK
MONITORING TIMERS (E.G.,
RLM/BFD TIMERS)

*RRCReconfiguration*

725

*RRCReconfigurationComplete*

727

FIG. 7

701 — UE (multi-Rx)

703 — gNB

705 — Synchronisation

707 — Initial Access and Registration

*UECapabilityEnquiry*

709 — *UECapabilityInformation*
{
    *measAndMobParameters*:

711 —     *"P_corr Reporting"*
    }
}

713 — *RRCReconfiguration*
{
    *OtherConfig-v1800*
    {
      *Pcorr <enable>*
    }
}

*RRCReconfigurationComplete*

715 — **Prepare for simultaneous measurements (e.g., L1, L3 or equivalent measurement procedures) and compute "Pcorr" considering all SMTC configurations**

717 — *UEAssistanceInformation*
{
    `UEAssistanceInformation-v1800-IEs`
    {
      `Pcorr <value>`
    ...
    }
}

**Based on reported Pcorr, prepare config with updated RLM/ BFD timers** — 719

*RRCReconfiguration*

721 — *RRCReconfigurationComplete*

FIG. 8

CASE 801

L1-RS

L3-RS

UE receives signals on
different mmWave modules

CASES 805a/805b

L1-RS

Delta AoA
small

L3-RS

UE receives signal on same mmWave module
With 4 layer support but small AoA

CASE 803

L1-RS

L3-RS

UE receives signals on
same mmWave module
Without 4 layer support

CASE 807

L1-RS

Delta AoA
Large

L3-RS

UE receives signal on same mmWave module
With 4 layer support and large AoA

FIG. 9

901 — (001) Does UE have simultaneousReceptionDiffTypeD-r16 capability ? — no → Fall back to legacy reporting — 903

yes ↓

CASE 801

905 — Is L1 ref signal received on same UE mmWave module as neighbour cell ref signal? (002) — no → UE calculates Pcorr (002b) → UE signals Pcorr to Network — 909

907

yes ↓

CASE 803

911 — Does Active UE mmWave module support 4 layer RX (003) — no → Fall back to legacy reporting — 913

yes ↓

917

CASE 805a

915 — Sufficient AoA separation ? (004) — no → Are L1 and L3 signals separable (freq, code) ? (004b) — no → Fall back to legacy reporting — 919

yes ↓ ... yes ↓

CASE 805b

921 — UE calculates Pcorr (004c) → UE signals Pcorr to Network — 923

CASE 807

925 — UE calculates Pcorr (004d) → UE signals Pcorr to Network — 927

# FIG. 10A

1000

| 3 mmWave module UE example | | | | | | | | | | | | | | | | | | |
|---|---|---|---|---|---|---|---|---|---|---|---|---|---|---|---|---|---|---|
| Module for L1 | 3 | 3 | 3 | 3 | 3 | **3** | 3 | 3 | 3 | 3 | 3 | **3** | 3 | 3 | 3 | 3 | 3 | **3** |
| Module for L3 | | 1 | | 2 | | **3** | | 1 | | 2 | | **3** | | 1 | | 2 | | **3** |

| 4 mmWave module example | | | | | | | | | | | | | | | | | | |
|---|---|---|---|---|---|---|---|---|---|---|---|---|---|---|---|---|---|---|
| Module for L1 | 4 | 4 | 4 | 4 | 4 | 4 | 4 | **4** | 4 | 4 | 4 | 4 | 4 | 4 | 4 | **4** | 4 | 4 |
| Module for L3 | | 1 | | 2 | | 3 | | **4** | | 1 | | 2 | | 3 | | **4** | | 1 |

# FIG. 10B

1020

| 3 mmWave module UE example | | | | | | | | | | | | | | | | | | |
|---|---|---|---|---|---|---|---|---|---|---|---|---|---|---|---|---|---|---|
| Module for L1 | 3 | 3 | 3 | 3 | 3 | **3** | 3 | 3 | 3 | 3 | 3 | **3** | 3 | 3 | 3 | 3 | 3 | **3** |
| Module for L3 | | 1 | | 2 | | **3\*** | | 1 | | 2 | | **3** | | 1 | | 2 | | **3\*** |

| 4 mmWave module example | | | | | | | | | | | | | | | | | | |
|---|---|---|---|---|---|---|---|---|---|---|---|---|---|---|---|---|---|---|
| Module for L1 | 4 | 4 | 4 | 4 | 4 | 4 | 4 | **4** | 4 | 4 | 4 | 4 | 4 | 4 | 4 | **4** | 4 | 4 |
| Module for L3 | | 1 | | 2 | | 3 | | **4\*** | | 1 | | 2 | | 3 | | **4** | | 1 |

## FIG. 11A

```
UE-NR-Capability ::=              SEQUENCE {
    ...,
    measAndMobParameters    MeasAndMobParameters      OPTIONAL,
    ...,
}

MeasAndMobParameters ::=                   SEQUENCE {
    measAndMobParametersCommon      MeasAndMobParametersCommon  OPTIONAL,
    ...
}

MeasAndMobParametersCommon ::=        SEQUENCE {
    Pcorr-Reporting              ENUMERATED {supported}      OPTIONAL,
}
         1101
```

## FIG. 11B

```
RRCReconfiguration-v1800-IEs ::=    SEQUENCE {
    otherConfig-v1800       OtherConfig-v1800        OPTIONAL, -- Need M
}

OtherConfig-v1800 ::=      SEQUENCE {
    pcorr-reporting        ENUMERATED {true}       OPTIONAL, -- Need Cond Pcorr-Reporting
}
      1121
```

## FIG. 11C

```
UEAssistanceInformation ::=          SEQUENCE {
    criticalExtensions                   CHOICE {
    ueAssistanceInformation       UEAssistanceInformation-IEs

    ...
}

UEAssistanceInformation-IEs ::=      SEQUENCE {
    ...,
    nonCriticalExtension                 UEAssistanceInformation-v1540-IEs   OPTIONAL
}


UEAssistanceInformation-v1540-IEs ::= SEQUENCE {
    ...,
    nonCriticalExtension                 UEAssistanceInformation-v1610-IEs   OPTIONAL
}

UEAssistanceInformation-v1610-IEs ::= SEQUENCE {
    ...
    nonCriticalExtension                 UEAssistanceInformation-v1700-IEs   OPTIONAL
}

UEAssistanceInformation-v1700-IEs ::= SEQUENCE {
    ... ,
    nonCriticalExtension                 UEAssistanceInformation-v1800-IEs   OPTIONAL
}

UEAssistanceInformation-v1800-IEs ::= SEQUENCE {
    Pcorr                                INTEGER (0..15)                     OPTIONAL
    ...,
}
        1121
```

FIG. 12

<u>1200</u>

COMPUTE CORRECTED LINK EVALUATION
SHARING FACTOR

1201

TRANSMIT CORRECTED LINK EVALUATION
FACTOR TO NETWORK NODE

1203

FIG. 13

<u>1300</u>

```
RECEIVE CORRECTED LINK EVALUATION
1301 —        FACTOR FROM UE

                    ↓

COMPUTE UPDATED LINK MONITORING
1303 —              TIMERS

                    ↓

TRANSMIT UPDATED LINK MONITORING
1305 —          TIMERS TO UE
```

FIG. 14

FIG. 15

1500

PROCESSOR
1503

DSP 1507

ASIC 1509

BUS 1501

MEMORY 1505

Europäisches
Patentamt

European
Patent Office

Office européen
des brevets

# EUROPEAN SEARCH REPORT

**Application Number**

EP 24 15 2357

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/236701 A1 (APPLE INC [US]) 17 November 2022 (2022-11-17) | 1-3,5-7, 12,14,15 | INV. H04B7/08 |
| Y | * paragraphs [0015], [0042], [0051], | 9 | H04L5/00 |
| A | [0062] - [0073]; figures 1, 9 * | 8,10,11 | H04W72/23 H04W24/10 |
| | ----- | | |
| X | US 2022/046443 A1 (TANG YANG [US] ET AL) 10 February 2022 (2022-02-10) | 1-7,13, 15 | |
| Y | * paragraphs [0028], [0043], [0049], | 9 | |
| A | [0060] - [0063]; figures 2, 4 * | 8,10,11 | |
| | ----- | | |
| Y | MODERATOR (QUALCOMM): "Email discussion summary for [104-bis-e][212] FR2_multiRx_RRM_part2", 3GPP DRAFT; R4-2216923, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Electronic Meeting; 20221010 - 20221019 14 October 2022 (2022-10-14), XP052268297, Retrieved from the Internet: URL:https://ftp.3gpp.org/tsg_ran/WG4_Radio /TSGR4_104bis-e/Docs/R4-2216923.zip [retrieved on 2022-10-14] * pages 27-28 * | 9 | |
| | ----- | | |

**TECHNICAL FIELDS SEARCHED (IPC)**

H04B
H04W
H04L

The present search report has been drawn up for all claims

| Place of search | Date of completion of the search | Examiner |
|---|---|---|
| Munich | 3 July 2024 | Ganis, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 2357

This annex lists the patent family members relating to the patent documents cited in  the above-mentioned European search report.
The members are as contained in the European Patent Office EDP file on
The European Patent Office is in no way liable for these particulars which are merely given for the purpose of information.

03-07-2024

| Patent document cited in search report | | Publication date | Patent family member(s) | | Publication date |
|---|---|---|---|---|---|
| WO 2022236701 | A1 | 17-11-2022 | CN | 117204005 A | 08-12-2023 |
| | | | US | 2024163752 A1 | 16-05-2024 |
| | | | WO | 2022236701 A1 | 17-11-2022 |
| US 2022046443 | A1 | 10-02-2022 | NONE | | |

EPO FORM P0459

For more details about this annex : see Official Journal of the European Patent Office, No. 12/82